(19) Europäisches Patentamt
European Patent Office
Office européen des brevets

(11) EP 2 999 734 B1

(12) **EUROPEAN PATENT SPECIFICATION**

(45) Date of publication and mention of the grant of the patent:
**03.07.2019 Bulletin 2019/27**

(21) Application number: **14728657.9**

(22) Date of filing: **21.05.2014**

(51) Int Cl.:
***C08G 64/20*** (2006.01) ***C08G 64/04*** (2006.01)
***C08G 64/30*** (2006.01)

(86) International application number:
**PCT/IB2014/061600**

(87) International publication number:
**WO 2014/188360 (27.11.2014 Gazette 2014/48)**

(54) **METHODS FOR MAKING MELT POLYMERIZATION POLYCONDENSATION PRODUCTS**

VERFAHREN ZUR HERSTELLUNG VON POLYKONDENSATIONSPRODUKTEN DURCH SCHMELZPOLYMERISATION

PROCÉDÉS DE FABRICATION DE PRODUITS DE POLYCONDENSATION DE POLYMÉRISATION EN MILIEU FONDU

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **23.05.2013 US 201361826702 P**

(43) Date of publication of application:
**30.03.2016 Bulletin 2016/13**

(73) Proprietor: **Saudi Basic Industries Corporation**
**Riyadh 11422 (SA)**

(72) Inventors:
- **SEOANE, Carlos Godinez**
**6160 GA Geleen (NL)**
- **ANNONUEVO, Jeffrey P.**
**Riyadh 11551 (SA)**
- **RAFI, G. Mohammed**
**Riyadh 11551 (SA)**
- **AL-FARHOOD, Bander**
**Riyadh 11422 (SA)**
- **AL-HAZMI, Abdulrahman**
**Riyadh 11551 (SA)**
- **BELFADHEL, Hatem Abdallah**
**Riyadh 11551 (SA)**

(74) Representative: **Terpsma, Jelle Philip**
**SABIC Intellectual Property Group**
**P.O. Box 3008**
**6160 GA Geleen (NL)**

(56) References cited:
**US-A1- 2003 199 665**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 2 999 734 B1

## Description

BACKGROUND OF THE INVENTION

The present invention relates to methods for making melt polymerization polycondensation products.

In polycondensation reactions, monomers are reacted in the presence of a catalyst, high temperature and vacuum conditions in order to achieve a high molecular weight product. Particularly in polycarbonate manufacture, basic catalysts are employed in concentrations as low as parts per billion with respect to the limiting reagent. Accordingly, the presence of even minute acidic impurities in any of the polycondensation reactants may partially or completely deactivate the catalyst.

A method for determining concentration of acidic impurities at the part-per-billion (ppb) level in Bisphenol A (BPA) and/or diphenyl carbonate (DPC) monomers would be highly desirable as it correlates directly with their capability to give a proper reaction. An electroanalytical method based in the acid-base titration of sulfonic-acid group, and an ionic chromatography method based in the analysis of certain anions prior water extraction have been reported, but neither have proved to provide reliable results. Threshold detecting limit for electroanalytical method is around part-per-million level which makes it only suitable for application to streams immediately after the reaction section but not in the final BPA product. On the other hand, water extraction is incomplete since the accessibility of solvent molecules to non-porous BPA particles is restricted only to acidic impurities existing on the particle surface.

Furthermore, a full determination of all the potential acidic impurities to these very low levels of concentration and their influence on deactivation kinetics is an impracticable task. Currently, indirect reactivity tests used at many polymerization facilities lack a sufficient level of repeatability and reproducibility to make it useful as a control strategy in the plant production environment. In addition, many off-line tests require reaction durations in the order of 4 hours, which diminishes its value in corrective actions.

Traditionally, BPA molten color has been used as an indirect indication of the presence of oligomers. In fact, both phenomena are interrelated and can occur simultaneously because oligomers promote higher levels of thermal cracking byproducts some of them are mostly to colored products. However, when the level of oligomers release is very low, an increase in the BPA molten color might not be noticeable, but still this BPA will be non-reactive [0005a] US2003/00199665 discloses a process for the production of a polycarbonate, which involves measuring the molar ratio of the carbonic acid diester to the aromatic dihydroxy compound and and controlling a supply of the dihydroxy compound and/or the carbonic acid diester to the reactor system so that the measured molar ratio is maintained within a selected range. These ratios are measured by near infrared spectroscopy.

Accordingly, there remains a need for methods of making a melt polymerization polycondensation product using real-time, on-line measurement of the intrinsic ability of reaction of polycondensation reactants. This and other needs are satisfied by the various aspects of the present disclosure.

SUMMARY OF THE INVENTION

In one aspect, the invention relates to methods for making a melt polymerization polycondensation product. In a further aspect, the invention relates to a method of real-time, on-line determination of reactivity of polycondensation reaction mixtures using near infrared spectroscopy. Thus, in a further aspect, the present invention relates to a method for making a melt polymerization polycondensation product using real-time, on-line measurement of the intrinsic ability of reaction of polycondensation reactants.

In a further aspect, described herein is method for making a melt polymerization polycondensation product, comprising the steps of: providing a first polycondensation reaction mixture comprising an aromatic dihydroxy compound, a diaryl carbonate ester, and at least one catalyst at a predetermined concentration; subjecting the first polycondensation reaction mixture for a time "T" to conditions effective to result in a formation of a second polycondensation reaction mixture, comprising at least one polycondensation product; analyzing the second polycondensation reaction mixture after time "T" with near infrared spectroscopy to determine an absorbance spectrum of the second polycondensation reaction mixture; determining a concentration of at least one reaction component present in the second polycondensation reaction mixture from the absorbance spectrum; and comparing the determined concentration of the at least one reaction component to a predefined standard concentration to determine whether the determined concentration satisfies the predefined standard concentration, wherein when the determined concentration does not satisfy the predefined standard concentration, the predetermined concentration of the at least one catalyst present in the first reaction mixture is adjusted and steps b) through e) are repeated.

Additional aspects of the invention will be set forth, in part, in the description which follows, and in part will be obvious from the description, or can be learned by practice of the invention. The advantages of the invention will be realized and attained by means of the elements and combinations particularly pointed out in the appended claims. It is to be understood that both the foregoing general description and the following detailed description are exemplary and

explanatory only and are not restrictive of the invention, as claimed.

BRIEF DESCRIPTION OF THE DRAWINGS

The accompanying drawings, which are incorporated in and constitute a part of this specification, illustrate exemplary aspects and together with the description, serve to explain the principles of the compositions, methods and systems disclosed herein.

FIG. 1 is a graph representing the spectra and correlation plot for BPA for samples measured without solvent intervention.
FIG. 2 shows an exemplary layout of a NIR spectroscopic probe and spectrometer employed in accordance with the present invention.
FIG. 3 shows an exemplary layout of a NIR spectroscopic probe and spectrometer employed in accordance with the present invention.

DETAILED DESCRIPTION OF THE INVENTION

The present invention can be understood more readily by reference to the following detailed description of the invention and the Examples included therein.
Before the present compounds, compositions, articles, systems, devices, and/or methods are disclosed and described, it is to be understood that they are not limited to specific synthetic methods unless otherwise specified, or to particular reagents unless otherwise specified, as such can, of course, vary. It is also to be understood that the terminology used herein is for the purpose of describing particular aspects only and is not intended to be limiting. Although any methods and materials similar or equivalent to those described herein can be used in the practice or testing of the present invention, example methods and materials are now described.
Moreover, it is to be understood that unless otherwise expressly stated, it is in no way intended that any method set forth herein be construed as requiring that its steps be performed in a specific order. Accordingly, where a method claim does not actually recite an order to be followed by its steps or it is not otherwise specifically stated in the claims or descriptions that the steps are to be limited to a specific order, it is no way intended that an order be inferred, in any respect. This holds for any possible non-express basis for interpretation, including: matters of logic with respect to arrangement of steps or operational flow; plain meaning derived from grammatical organization or punctuation; and the number or type of embodiments described in the specification.

DEFINITIONS

It is also to be understood that the terminology used herein is for the purpose of describing particular aspects only and is not intended to be limiting. As used in the specification and in the claims, the term "comprising" can include the embodiments "consisting of' and "consisting essentially of." Unless defined otherwise, all technical and scientific terms used herein have the same meaning as commonly understood by one of ordinary skill in the art to which this invention belongs. In this specification and in the claims which follow, reference will be made to a number of terms which shall be defined herein.
As used in the specification and the appended claims, the singular forms "a," "an" and "the" include plural referents unless the context clearly dictates otherwise. Thus, for example, reference to "a reaction component" includes mixtures of two or more reaction components.
As used herein, the term "combination" is inclusive of blends, mixtures, alloys, reaction products, and the like.
Ranges can be expressed herein as from one particular value, and/or to another particular value. When such a range is expressed, another aspect includes from the one particular value and/or to the other particular value. Similarly, when values are expressed as approximations, by use of the antecedent 'about,' it will be understood that the particular value forms another aspect. It will be further understood that the endpoints of each of the ranges are significant both in relation to the other endpoint, and independently of the other endpoint. It is also understood that there are a number of values disclosed herein, and that each value is also herein disclosed as "about" that particular value in addition to the value itself. For example, if the value "10" is disclosed, then "about 10" is also disclosed. It is also understood that each unit between two particular units are also disclosed. For example, if 10 and 15 are disclosed, then 11, 12, 13, and 14 are also disclosed.
As used herein, the terms "about" and "at or about" mean that the amount or value in question can be the value designated, or some other value approximately or about the same as the value designated. It is generally understood, as used herein, that it is the nominal value indicated $\pm$10% variation unless otherwise indicated or inferred. The term is intended to convey that similar values promote equivalent results or effects recited in the claims. That is, it is understood

that amounts, sizes, formulations, parameters, and other quantities and characteristics are not and need not be exact, but can be approximate and/or larger or smaller, as desired, reflecting tolerances, conversion factors, rounding off, measurement error and the like, and other factors known to those of skill in the art. In general, an amount, size, formulation, parameter or other quantity or characteristic is "about" or "approximate" whether or not expressly stated to be such. It is understood that where "about" is used before a quantitative value, the parameter also includes the specific quantitative value itself, unless specifically stated otherwise.

The terms "first," "second," "first part," "second part," and the like, where used herein, do not denote any order, quantity, or importance, and are used to distinguish one element from another, unless specifically stated otherwise.

As used herein, the terms "optional" or "optionally" means that the subsequently described event or circumstance can or cannot occur, and that the description includes instances where said event or circumstance occurs and instances where it does not. For example, the phrase "optionally substituted alkyl" means that the alkyl group can or cannot be substituted and that the description includes both substituted and unsubstituted alkyl groups.

As used herein, the term or phrase "effective," "effective amount," or "conditions effective to" refers to such amount or condition that is capable of performing the function or property for which an effective amount is expressed. As will be pointed out below, the exact amount or particular condition required will vary from one aspect to another, depending on recognized variables such as the materials employed and the processing conditions observed. Thus, it is not always possible to specify an exact "effective amount" or "condition effective to." However, it should be understood that an appropriate effective amount will be readily determined by one of ordinary skill in the art using only routine experimentation.

Disclosed are the components to be used to prepare the systems of the invention as well as the compositions themselves to be used within the methods disclosed herein. These and other materials are disclosed herein, and it is understood that when combinations, subsets, interactions, groups, etc. of these materials are disclosed that while specific reference of each various individual and collective combinations and permutation of these compounds cannot be explicitly disclosed, each is specifically contemplated and described herein. For example, if a particular compound is disclosed and discussed and a number of modifications that can be made to a number of molecules including the compounds are discussed, specifically contemplated is each and every combination and permutation of the compound and the modifications that are possible unless specifically indicated to the contrary. Thus, if a class of molecules A, B, and C are disclosed as well as a class of molecules D, E, and F and an example of a combination molecule, A-D is disclosed, then even if each is not individually recited each is individually and collectively contemplated meaning combinations, A-E, A-F, B-D, B-E, B-F, C-D, C-E, and C-F are considered disclosed. Likewise, any subset or combination of these is also disclosed. Thus, for example, the sub-group of A-E, B-F, and C-E would be considered disclosed. This concept applies to all aspects of this application including, but not limited to, steps in methods of making and using the compositions of the invention. Thus, if there are a variety of additional steps that can be performed it is understood that each of these additional steps can be performed with any specific aspect or combination of aspects of the methods of the invention.

References in the specification and concluding claims to parts by weight, of a particular element or component in a composition or article, denotes the weight relationship between the element or component and any other elements or components in the composition or article for which a part by weight is expressed. Thus, in a compound containing 2 parts by weight of component X and 5 parts by weight component Y, X and Y are present at a weight ratio of 2:5, and are present in such ratio regardless of whether additional components are contained in the compound.

A weight percent ("wt%") of a component, unless specifically stated to the contrary, is based on the total weight of the formulation or composition in which the component is included. For example if a particular element or component in a composition or article is said to have 8% by weight, it is understood that this percentage is relative to a total compositional percentage of 100% by weight.

Compounds are described using standard nomenclature. For example, any position not substituted by any indicated group is understood to have its valence filled by a bond as indicated, or a hydrogen atom. A dash ("-") that is not between two letters or symbols is used to indicate a point of attachment for a substituent. For example, -CHO is attached through carbon of the carbonyl group. Unless defined otherwise, technical and scientific terms used herein have the same meaning as is commonly understood by one of skill in the art to which this invention belongs.

The term "alkyl group" as used herein is a branched or unbranched saturated hydrocarbon group of 1 to 24 carbon atoms, such as methyl, ethyl, n propyl, isopropyl, n butyl, isobutyl, t butyl, pentyl, hexyl, heptyl, octyl, decyl, tetradecyl, hexadecyl, eicosyl, tetracosyl and the like. A "lower alkyl" group is an alkyl group containing from one to six carbon atoms.

The term "aryl group" as used herein is any carbon-based aromatic group including, but not limited to, benzene, naphthalene, etc. The term "aromatic" also includes "heteroaryl group," which is defined as an aromatic group that has at least one heteroatom incorporated within the ring of the aromatic group. Examples of heteroatoms include, but are not limited to, nitrogen, oxygen, sulfur, and phosphorus. The aryl group can be substituted or unsubstituted. The aryl group can be substituted with one or more groups including, but not limited to, alkyl, alkynyl, alkenyl, aryl, halide, nitro, amino, ester, ketone, aldehyde, hydroxy, carboxylic acid, or alkoxy.

The term "aralkyl" as used herein is an aryl group having an alkyl, alkynyl, or alkenyl group as defined above attached to the aromatic group. An example of an aralkyl group is a benzyl group.

The term "carbonate group" as used herein is represented by the formula OC(O)OR, where R can be hydrogen, an alkyl, alkenyl, alkynyl, aryl, aralkyl, cycloalkyl, halogenated alkyl, or heterocycloalkyl group described above.

As used herein, the terms "number average molecular weight" or "$M_n$" can be used interchangeably, and refer to the statistical average molecular weight of all the polymer chains in the sample and is defined by the formula:

$$M_n = \frac{\sum N_i M_i}{\sum N_i},$$

where $M_i$ is the molecular weight of a chain and $N_i$ is the number of chains of that molecular weight. $M_n$ can be determined for polymers, e.g. polycarbonate polymers, by methods well known to a person having ordinary skill in the art using molecular weight standards, e.g. polycarbonate standards or polystyrene standards, preferably certified or traceable molecular weight standards.

As used herein, the terms "weight average molecular weight" or "Mw" can be used interchangeably, and are defined by the formula:

$$M_w = \frac{\sum N_i M_i^{\ 2}}{\sum N_i M_i},$$

where $M_i$ is the molecular weight of a chain and $N_i$ is the number of chains of that molecular weight. Compared to $M_n$, $M_w$ takes into account the molecular weight of a given chain in determining contributions to the molecular weight average. Thus, the greater the molecular weight of a given chain, the more the chain contributes to the $M_w$. $M_w$ can be determined for polymers, e.g. polycarbonate polymers, by methods well known to a person having ordinary skill in the art using molecular weight standards, e.g. polycarbonate standards or polystyrene standards, preferably certified or traceable molecular weight standards.

As used herein, "polycarbonate" refers to an oligomer or polymer comprising residues of one or more dihydroxy compounds, e.g. dihydroxy aromatic compounds, joined by carbonate linkages; it also encompasses homopolycarbonates, copolycarbonates, and (co)polyester carbonates.

The terms "residues" and "structural units", used in reference to the constituents of the polymers, are synonymous throughout the specification.

Each of the materials disclosed herein are either commercially available and/or the methods for the production thereof are known to those of skill in the art.

It is understood that the compositions disclosed herein have certain functions. Disclosed herein are certain structural requirements for performing the disclosed functions, and it is understood that there are a variety of structures that can perform the same function that are related to the disclosed structures, and that these structures will typically achieve the same result.

## METHODS FOR MAKING A MELT POLYMERIZATION POLYCONDENSATION PRODUCT

According to aspects of the disclosure, as briefly described above, the present invention relates to a method for making a melt polymerization polycondensation product. In various further aspects, the invention relates to a method of real-time, on-line determination of reactivity of polycondensation reaction mixtures using near infrared spectroscopy. Thus, in still further aspects, the present methods relates to a method for making a melt polymerization polycondensation product using real-time, on-line measurement of the intrinsic ability of reaction of polycondensation reactants.

In a further aspect, described herein are methods for making a melt polymerization polycondensation product, comprising the steps of: providing a first polycondensation reaction mixture comprising an aromatic dihydroxy compound, a diaryl carbonate ester, and at least one catalyst at a predetermined concentration; subjecting the first polycondensation reaction mixture for a time "T" to conditions effective to result in a formation of a second polycondensation reaction mixture, comprising at least one polycondensation product; analyzing the second polycondensation reaction mixture after time "T" with near infrared spectroscopy to determine an absorbance spectrum of the second polycondensation reaction mixture; determining a concentration of at least one reaction component present in the second polycondensation reaction mixture from the absorbance spectrum; and comparing the determined concentration of the at least one reaction component to a predefined standard concentration to determine whether the determined concentration satisfies the predefined standard concentration, wherein when the determined concentration does not satisfy the predefined standard concentration, the predetermined concentration of the at least one catalyst present in the first reaction mixture is adjusted

and steps b) through e) are repeated.

In various aspects, the present invention comprises providing at least one polycondensation reaction mixture. In further aspects, the polycondensation reaction mixture comprise a first polycondensation reaction mixture, second polycondensation reaction mixture, polycondensation reactant, or polycondensation product, or combinations thereof.

According to further aspects of the disclosure, the polycondensation reaction mixtures are formed from polycondensation reactants. In some aspects, polycondensation reaction mixtures are formed from a single batch of polycondensation reactants. In still further aspects, the polycondensation reaction mixture is formed from new polycondensation reactants, for example, polycondensation reactants that have not been previously tested or used.

In other aspects, the methods comprise providing a first polycondensation reaction mixture comprising polycondensation reactants at a predetermined concentration, for example, an aromatic dihydroxy compound, a diaryl carbonate ester, and at least one catalyst at a predetermined concentration.

In further aspects, first polycondensation reaction mixtures are reacted for a time "T' to form second polycondensation reaction mixtures. In still further aspects, the second polycondensation reaction mixtures comprise at least one polycondensation product. That is, in yet further aspects, polycondensation reactants in the polycondensation reaction mixtures are reacted in the presence of the at least one catalyst under conditions effective to form at least one polycondensation product.

In further aspects, the polycondensation reaction mixtures comprise at least one reaction component. In still further aspects, the reaction component can comprise starting reactants, chemical intermediates, reaction by-products, or end products, or combinations thereof.

In various aspects, the specific reaction components and composition of the polycondensation reaction mixture will depend on the reaction duration, temperature, and pressure. For example, according to some aspects, high temperatures and vacuum conditions are used to achieve a high molecular weight polycondensation product.

In other aspects, the composition of a polycondensation reaction mixture, for example, will depend on the starting reactants and catalysts in the polycondensation reaction mixture. For example, according to aspects of polycondensation reactions, catalysts of a basic nature are employed in concentrations in the range of parts per billion with respect to the limiting reagent. In some aspects, polycondensation reactants and catalysts in the polycondensation mixtures comprise impurities, which when released in the polycondensation mixture in concentrations of the same order of magnitude, can partially or completely deactivate the catalyst. In other aspects, presence of impurities can also result in intermittent episodes of catalyst de-crosslinking giving rise to the formation of low levels of oligomers of sulfonated polystyrene inside the resin beads, affecting downstream polymerization reactions. In this aspect, the level or amount of impurities in starting reactants is sometimes unknown, for example, when using new, untested polycondensation reactants. Accordingly, the influence on deactivation kinetics from impurities can be difficult to predict.

In this aspect, the composition of the polycondensation reaction mixtures will vary depending on all of the above described factors. In some aspects, the polycondensation reaction mixtures comprise unreacted starting reactants, chemical intermediates, reaction by-products, or end products, or combinations thereof. For example, in polycarbonate melt polymerization, the starting reactants can comprise bisphenol A (BPA) or diphenyl carbonate (DPC), the chemical intermediates can comprise oligomers, the reaction by-products can comprise phenol, and the end products can comprise a final polymer.

In further aspects, reaction components can be present in any concentration. For example, according to aspects of the disclosure, the reaction component can be present in an amount in the range of from single molecules up to about 100 weight % relative to the total weight of the polycondensation reaction mixture, including further exemplary amounts of about 5 weight %, about 10 weight %, 15 weight %, 20 weight %, 25 weight%, 30 weight %, 35 weight %, 40 weight %, 45 weight %, 50 weight %, 55 weight %, 60 weight %, 65 weight %, 70 weight %, 75 weight %, 80 weight %, 85 weight %, 90 weight %, about 95 weight %. In still further aspects, the reaction component can be present within any range of amount derived from any two of the above stated values. For example, a reaction component can be present in an amount in the range of from about 5 to about 15 weight %, or in an amount in the range of from about 5 weight % to about 20 weight %, or in an amount in the range of from about 50 weight % to about 85 weight % relative to the total weight of the polycondensation reaction mixture.

In various aspects, the methods involve reaction conditions effective to support reacting of the polycondensation reactants present in the polycondensation reaction mixture. In further aspects, the conditions effective comprise reaction conditions sufficient to support formation of at least one polycarbonate polycondensation product from the polycondensation reaction mixture. In other aspects, conditions effective comprise reaction conditions of a melt polymerization reaction, for example, reaction conditions and components involved in the melt polymerization of polycarbonates.

In further aspects, the polycondensation reaction mixture comprises a polycarbonate reaction mixture. In a still further aspect, the polycarbonate reaction mixture comprises a polycarbonate melt polymerization mixture.

In other aspects, the at least one polycondensation product present in the polycondensation reaction mixture comprises a polycarbonate, a polycarbonate product, or an intermediate polycarbonate product, or combinations thereof.

In one aspect, a polycarbonate can comprise any polycarbonate material or mixture of materials, for example,

as recited in U.S. Patent No. 7,786,246, which is hereby incorporated in its entirety for the specific purpose of disclosing various polycarbonate compositions and methods. The term polycarbonate can be further defined as compositions have repeating structural units of the formula (1):

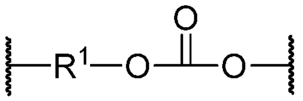 (1),

in which at least 60 percent of the total number of $R^1$ groups are aromatic organic radicals and the balance thereof are aliphatic, alicyclic, or aromatic radicals. Preferably, each $R^1$ is an aromatic organic radical and, more preferably, a radical of the formula (2):

$$-A^1-Y^1-A^2- \qquad (2),$$

wherein each of $A^1$ and $A^2$ is a monocyclic divalent aryl radical and $Y^1$ is a bridging radical having one or two atoms that separate $A^1$ from $A^2$. In various aspects, one atom separates $A^1$ from $A^2$. For example, radicals of this type include, but are not limited to, radicals such as -O-, -S-, -S(O)-, -S($O_2$)-, -C(O)-, methylene, cyclohexyl-methylene, 2-[2.2.1]-bicycloheptylidene, ethylidene, isopropylidene, neopentylidene, cyclohexylidene, cyclopentadecylidene, cyclododecylidene, and adamantylidene. The bridging radical $Y^1$ is preferably a hydrocarbon group or a saturated hydrocarbon group such as methylene, cyclohexylidene, or isopropylidene.

In a further aspect, polycarbonates can be produced by the reaction of dihydroxy compounds having the formula HO-$R^1$-OH, which includes dihydroxy compounds of formula (3):

$$HO-A^1-Y^1-A^2-OH \qquad (3),$$

wherein $Y^1$, $A^1$ and $A^2$ are as described above. Also included are bisphenol compounds of general formula (4):

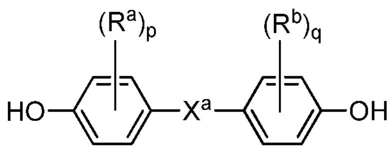 (4),

wherein $R^a$ and $R^b$ each represent a halogen atom or a monovalent hydrocarbon group and can be the same or different; p and q are each independently integers from 0 to 4; and $X^a$ represents one of the groups of formula (5):

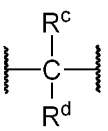 or 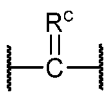 (5),

wherein $R^c$ and $R^d$ each independently represent a hydrogen atom or a monovalent linear or cyclic hydrocarbon group and $R^e$ is a divalent hydrocarbon group.

In various aspects, examples of suitable dihydroxy compounds include the dihydroxy-substituted hydrocarbons disclosed by name or formula (generic or specific) in U.S. Pat. No. 4,217,438. A nonexclusive list of specific examples of suitable dihydroxy compounds includes the following: resorcinol, 4-bromoresorcinol, hydroquinone, 4,4'-dihydroxybiphenyl, 1,6-dihydroxynaphthalene, 2,6-dihydroxynaphthalene, bis(4-hydroxyphenyl)methane, bis(4-hydroxyphenyl)diphenylmethane, bis(4-hydroxyphenyl)-1-naphthylmethane, 1,2-bis(4-hydroxyphenyl)ethane, 1,1-bis(4-hydroxyphenyl)-1-phenylethane, 2-(4-hydroxyphenyl)-2-(3-hydroxyphenyl)propane, bis(4-hydroxyphenyl)phenylmethane, 2,2-bis(4-hydroxy-3-bromophenyl)propane, 1,1-bis (hydroxyphenyl)cyclopentane, 1,1-bis(4-hydroxyphenyl)cyclohexane, 1,1-bis(4-hydroxyphenyl)isobutene, 1,1-bis(4-hydroxyphenyl)cyclododecane, trans-2,3-bis(4-hydroxyphenyl)-2-butene, 2,2-bis(4-hydroxyphenyl)adamantine, (alpha, alpha'-bis(4-hydroxyphenyl)toluene, bis(4-hydroxyphenyl)acetonitrile, 2,2-bis(3-methyl-4-hydroxyphenyl)propane, 2,2-bis(3-ethyl-4-hydroxyphenyl)propane, 2,2-bis(3-n-propyl-4-hydroxyphenyl)propane, 2,2-bis(3-isopropyl-4-hydroxyphenyl)propane, 2,2-bis(3-sec-butyl-4-hydroxyphenyl)propane, 2,2-bis(3-t-butyl-4-hydroxyphenyl)propane, 2,2-bis(3-cyclohexyl-4-hydroxyphenyl)propane, 2,2-bis(3-allyl-4-hydroxyphenyl)propane, 2,2-bis(3-methoxy-4-hydroxyphenyl)propane, 2,2-bis(4-hydroxyphenyl)hexafluoropropane, 1,1-dichloro-2,2-bis(4-hydroxyphenyl)ethylene, 1,1-dibromo-2,2-bis(4-hydroxyphenyl)ethylene, 1,1-dichloro-2,2-bis(5-phenoxy-4-hydroxyphenyl)ethylene, 4,4'-dihydroxybenzophenone, 3,3-bis(4-hydroxyphenyl)-2-butanone, 1,6-bis(4-hydroxyphenyl)-1,6-hexanedione, ethylene glycol bis(4-hydroxyphenyl)ether, bis(4-hydroxyphenyl)ether, bis(4-hydroxyphenyl)sulfide, bis(4-hydroxyphenyl)sulfoxide, bis(4-hydroxyphenyl)sulfone, 9,9-bis(4-hydroxyphenyl)fluorine, 2,7-dihydroxypyrene, 6,6'-dihydroxy-3,3,3',3'-tetramethylspiro(bis)indane ("spirobiindane bisphenol"), 3,3-bis(4-hydroxyphenyl)phthalide, 2,6-dihydroxydibenzo-p-dioxin, 2,6-dihydroxythianthrene, 2,7-dihydroxyphenoxathin, 2,7-dihydroxy-9,10-dimethylphenazine, 3,6-dihydroxydibenzofuran, 3,6-dihydroxydibenzothiophene, 2,7-dihydroxycarbazole, 3,3-bis(4-hydroxyphenyl)phthalimidine, 2-phenyl-3,3-bis-(4-hydroxyphenyl)phthalimidine (PPPBP), and the like, as well as mixtures including at least one of the foregoing dihydroxy compounds.

In a further aspect, examples of the types of bisphenol compounds that can be represented by formula (3) includes 1,1-bis(4-hydroxyphenyl)methane, 1,1-bis(4-hydroxyphenyl)ethane, 2,2-bis(4-hydroxyphenyl)propane (hereinafter "bisphenol A" or "BPA"), 2,2-bis(4-hydroxyphenyl)butane, 2,2-bis(4-hydroxyphenyl)octane, 1,1-bis(4-hydroxyphenyl)propane, 1,1-bis(4-hydroxyphenyl) n-butane, 2,2-bis(4-hydroxy-1-methylphenyl)propane, and 1,1-bis(4-hydroxy-t-butylphenyl)propane. Combinations including at least one of the foregoing dihydroxy compounds can also be used.

In various aspects, a polycarbonate can employ two or more different dihydroxy compounds or a copolymer of a dihydroxy compounds with a glycol or with a hydroxy- or acid-terminated polyester or with a dibasic acid or hydroxy acid in the event a carbonate copolymer rather than a homopolymer is desired for use. Polyarylates and polyester-carbonate resins or their blends can also be employed. Branched polycarbonates are also useful, as well as blends of linear polycarbonate and a branched polycarbonate. The branched polycarbonates can be prepared by adding a branching agent during polymerization.

In a further aspect, the branching agents include polyfunctional organic compounds containing at least three functional groups selected from hydroxyl, carboxyl, carboxylic anhydride, haloformyl, and mixtures thereof. Specific examples include trimellitic acid, trimellitic anhydride, trimellitic trichloride, tris-p-hydroxy phenyl ethane, isatin-bisphenol, tris-phenol TC (1,3,5-tris((p-hydroxyphenyl)isopropyl)benzene), tris-phenol PA (4(4(1,1-bis(p-hydroxyphenyl)-ethyl)alpha, alpha-dimethyl benzyl)phenol), 4-chloroformyl phthalic anhydride, trimesic acid, and benzophenone tetracarboxylic acid. The branching agents can be added at a level of from 0.05-2.0 weight percent. Branching agents and procedures for making branched polycarbonates are described in U.S. Pat. Nos. 3,635,895 and 4,001,184. All types of polycarbonate end groups are contemplated as being useful in the thermoplastic composition.

In a further aspect, the polycarbonates are based on bisphenol A, in which each of $A^1$ and $A^2$ is p-phenylene and $Y^1$ is isopropylidene. In a still further aspect, the molecular weight (Mw) of the polycarbonate is about 10,000 to about 100,000. In a yet further aspect, the polycarbonate has a Mw of about 15,000 to about 55,000. In an even further aspect, the polycarbonate has a Mw of about 18,000 to about 40,000.

Polycarbonates, including isosorbide-based polyester-polycarbonate, can comprise copolymers comprising carbonate units and other types of polymer units, including ester units, and combinations comprising at least one of homopolycarbonates and copolycarbonates. An exemplary polycarbonate copolymer of this type is a polyester carbonate, also known as a polyester-polycarbonate. Such copolymers further contain carbonate units derived from oligomeric ester-containing dihydroxy compounds (also referred to herein as hydroxy end-capped oligomeric acrylate esters).

As described herein, the polycondensation reaction mixtures, in various aspects, are subjected to reaction conditions of a melt polymerization reaction, for example, reaction conditions and components involved in the melt polymerization of polycarbonates. Generally, in the melt polymerization process, polycarbonates are prepared by co-reacting, in a molten state, the dihydroxy reactant(s) (i.e., isosorbide, aliphatic diol and/or aliphatic diacid, and any additional dihydroxy compound) and a diaryl carbonate ester, such as diphenyl carbonate, or more specifically in an aspect, an activated carbonate such as bis(methyl salicyl)carbonate, in the presence of at least one catalyst. The reaction can be carried out in typical polymerization equipment, such as one or more continuously stirred reactors (CSTRs), plug flow reactors, wire wetting fall polymerizers, free fall polymerizers, wiped film polymerizers, BANBURY® mixers, single or twin screw extruders, or combinations of the foregoing. In one aspect, volatile monohydric phenol can be removed from the molten reactants by distillation and the polymer is isolated as a molten residue.

In a further aspect, the melt polymerization can include a transesterification catalyst comprising a first catalyst, also referred to herein as an alpha catalyst, comprising a metal cation and an anion. In an aspect, the cation is an alkali or alkaline earth metal comprising Li, Na, K, Cs, Rb, Mg, Ca, Ba, Sr, or a combination comprising at least one of the foregoing. The anion is hydroxide ($OH^-$), superoxide ($O^{2-}$), thiolate ($HS^-$), sulfide ($S^{2-}$), a $C_{1-20}$ alkoxide, a $C_{6-20}$ aryloxide, a $C_{1-20}$ carboxylate, a phosphate including biphosphate, a $C_{1-20}$ phosphonate, a sulfate including bisulfate, sulfites including bisulfites and metabisulfites, a $C_{1-20}$ sulfonate, a carbonate including bicarbonate, or a combination comprising at least one of the foregoing. In another aspect, salts of an organic acid comprising both alkaline earth metal ions and alkali metal ions can also be used. Salts of organic acids useful as catalysts are illustrated by alkali metal and alkaline earth metal salts of formic acid, acetic acid, stearic acid and ethyelenediaminetetraacetic acid. The catalyst can also comprise the salt of a nonvolatile inorganic acid. By "nonvolatile", it is meant that the referenced compounds have no

appreciable vapor pressure at ambient temperature and pressure. In particular, these compounds are not volatile at temperatures at which melt polymerizations of polycarbonate are typically conducted. The salts of nonvolatile acids are alkali metal salts of phosphites; alkaline earth metal salts of phosphites; alkali metal salts of phosphates; and alkaline earth metal salts of phosphates. Exemplary transesterification catalysts include, lithium hydroxide, sodium hydroxide, potassium hydroxide, cesium hydroxide, magnesium hydroxide, calcium hydroxide, barium hydroxide, lithium formate, sodium formate, potassium formate, cesium formate, lithium acetate, sodium acetate, potassium acetate, lithium carbonate, sodium carbonate, potassium carbonate, lithium methoxide, sodium methoxide, potassium methoxide, lithium ethoxide, sodium ethoxide, potassium ethoxide, lithium phenoxide, sodium phenoxide, potassium phenoxide, sodium sulfate, potassium sulfate, $NaH_2PO_3$, $NaH_2PO_4$, $Na_2H_2PO_3$, $KH_2PO_4$, $CsH_2PO_4$, $Cs_2H_2PO_4$, $Na_2SO_3$, $Na_2S_2O_5$, sodium mesylate, potassium mesylate, sodium tosylate, potassium tosylate, magnesium disodium ethylenediamine tetraacetate (EDTA magnesium disodium salt), or a combination comprising at least one of the foregoing. It will be understood that the foregoing list is exemplary and should not be considered as limited thereto. In one aspect, the transesterification catalyst is an alpha catalyst comprising an alkali or alkaline earth salt. In an exemplary aspect, the transesterification catalyst comprises sodium hydroxide, potassium hydroxide, sodium carbonate, potassium carbonate, sodium methoxide, potassium methoxide, $NaH_2PO_4$, or a combination comprising at least one of the foregoing.

The amount of alpha catalyst can vary widely according to the conditions of the melt polymerization, and can be about 0.001 to about 500 micromoles ($\mu$mol). In an aspect, the amount of alpha catalyst can be about 0.01 to about 20 $\mu$mol, specifically about 0.1 to about 10 $\mu$mol, more specifically about 0.5 to about 9 $\mu$mol, and still more specifically about 1 to about 7 $\mu$mol, per mole of aliphatic diol and any other dihydroxy compound present in the melt polymerization.

In another aspect, a second transesterification catalyst, also referred to herein as a beta catalyst, can optionally be included in the melt polymerization process, provided that the inclusion of such a second transesterification catalyst does not significantly adversely affect the desirable properties of the polycarbonate. Exemplary transesterification catalysts can further include a combination of a phase transfer catalyst of formula $(R^3)_4Q^+X$ above, wherein each $R^3$ is the same or different, and is a $C_{1-10}$ alkyl group; Q is a nitrogen or phosphorus atom; and X is a halogen atom or a $C_{1-8}$ alkoxy group or $C_{6-18}$ aryloxy group. Exemplary phase transfer catalyst salts include, for example, $[CH_3(CH_2)_3]_4NX$, $[CH_3(CH_2)_3]_4PX$, $[CH_3(CH_2)_5]_4NX$, $[CH_3(CH_2)_6]_4NX$, $[CH_3(CH_2)_4]_4NX$, $CH_3[CH_3(CH_2)_3]_3NX$, and $CH_3[CH_3(CH_2)_2]_3NX$, wherein X is $Cl^-$, $Br^-$, a $C_{1-8}$ alkoxy group or a $C_{6-18}$ aryloxy group. Examples of such transesterification catalysts include tetrabutylammonium hydroxide, methyltributylammonium hydroxide, tetrabutylammonium acetate, tetrabutylphosphonium hydroxide, tetrabutylphosphonium acetate, tetrabutylphosphonium phenolate, or a combination comprising at least one of the foregoing. Other melt transesterification catalysts include alkaline earth metal salts or alkali metal salts. In various aspects, where a beta catalyst is desired, the beta catalyst can be present in a molar ratio, relative to the alpha catalyst, of less than or equal to 10, specifically less than or equal to 5, more specifically less than or equal to 1, and still more specifically less than or equal to 0.5. In other aspects, the melt polymerization reaction disclosed herein uses only an alpha catalyst as described hereinabove, and is substantially free of any beta catalyst. As defined herein, "substantially free of' can mean where the beta catalyst has been excluded from the melt polymerization reaction. In one aspect, the beta catalyst is present in an amount of less than about 10 parts per million (ppm), specifically less than 1 ppm, more specifically less than about 0.1 ppm, more specifically less than or equal to about 0.01 ppm, and more specifically less than or equal to about 0.001 ppm, based on the total weight of all components used in the melt polymerization reaction.

In one aspect, an end-capping agent (also referred to as a chain-stopper) can optionally be used to limit molecular weight growth rate, and so control molecular weight in the polycarbonate. Exemplary chain-stoppers include certain monophenolic compounds (i.e., phenyl compounds having a single free hydroxy group), monocarboxylic acid chlorides, and/or monochloroformates. Phenolic chain-stoppers are exemplified by phenol and $C_1$-$C_{22}$ alkyl-substituted phenols such as p-cumyl-phenol, resorcinol monobenzoate, and p- and tertiary-butyl phenol, cresol, and monoethers of diphenols, such as p-methoxyphenol. Alkyl-substituted phenols with branched chain alkyl substituents having 8 to 9 carbon atoms can be specifically mentioned.

In another aspect, endgroups can be derived from the carbonyl source (i.e., the diaryl carbonate), from selection of monomer ratios, incomplete polymerization, chain scission, and the like, as well as any added end-capping groups, and can include derivatizable functional groups such as hydroxy groups, carboxylic acid groups, or the like. In one aspect, the endgroup of a polycarbonate, including a polycarbonate polymer as defined herein, can comprise a structural unit derived from a diaryl carbonate, where the structural unit can be an endgroup. In a further aspect, the endgroup is derived from an activated carbonate. Such endgroups can be derived from the transesterification reaction of the alkyl ester of an appropriately substituted activated carbonate, with a hydroxy group at the end of a polycarbonate polymer chain, under conditions in which the hydroxy group reacts with the ester carbonyl from the activated carbonate, instead of with the carbonate carbonyl of the activated carbonate. In this way, structural units derived from ester containing compounds or substructures derived from the activated carbonate and present in the melt polymerization reaction can form ester endgroups.

In other aspects, conditions effective comprise subjecting the polycondensation reaction mixture to a series of

temperature-pressure-time protocols. In some aspects, this involves gradually raising the reaction temperature in stages while gradually lowering the pressure in stages. In one aspect, the pressure is reduced from about atmospheric pressure at the start of the reaction to about 1 millibar (100 Pa) or lower, or in another aspect to 0.1 millibar (10 Pa) or lower in several steps as the reaction approaches completion. In a further aspect, the temperature can be varied in a stepwise fashion beginning at a temperature of about the melting temperature of the polycondensation reaction mixture and subsequently increased to final temperature. In one aspect, the polycondensation reaction mixture is heated from room temperature to about 150 °C. In such an aspect, the polymerization reaction starts at a temperature of about 150 °C to about 220 °C. In another aspect, the polymerization temperature can be up to about 220 °C. In other aspects, the polymerization reaction can then be optionally increased to about 250 °C and then optionally further increased to a temperature of about 320 °C, and all subranges there between.

In various aspects, the time "T" comprises the total reaction time. In other aspects, the time "T" can be from about 30 minutes to about 360 minutes and all subranges there between. In the absence of non-reactive starting reactants or catalyst deactivation, the reaction conditions will generally ensure that the starting reactants react to give polycondensation products, for example, polycarbonates products, having the desired molecular weight, glass transition temperature and physical properties.

If maintained, the reaction proceeds to build the polycarbonate chain with production of ester-substituted alcohol by-product such as methyl salicylate. In one aspect, efficient removal of the by-product can be achieved by different techniques such as reducing the pressure. Generally the pressure starts relatively high in the beginning of the reaction and is lowered progressively throughout the reaction and temperature is raised throughout the reaction. After the desired viscosity and/or molecular weight is reached, the final polycarbonate product can be isolated from the reactor in a solid or molten form.

According to various aspects of the disclosure, the polycondensation reaction mixture is analyzed after time "T" to determine an absorbance spectrum of the polycondensation reaction mixture. In some aspects, the polycondensation reaction mixture is analyzed during a formulation or prepolymerization stage, for example, while in an initial mixture tank. In further aspects, the polycondensation reaction mixture is analyzed prior to reaching a high viscosity and/or molecular weight, so as to prevent generation of out of specification material.

In further aspects, the polycondensation reaction mixture is analyzed using near-infrared spectroscopy (NIR). In still further aspects, near-infrared spectroscopy is used to determine an absorbance spectrum of at least one reaction component present in the polycondensation reaction mixture. In yet further aspects, near-infrared spectroscopy is used to determine absorbance spectrum of multiple reaction components present in the polycondensation reaction mixture. In some aspects, the polycondensation reaction mixture is analyzed using Raman spectroscopy. In other aspects, the polycondensation reaction mixture is analyzed using UV-Vis spectroscopy.

Near-infrared spectroscopy (NIR) is an analytical method that uses the near-infrared region of the electromagnetic spectrum (from about 800 nanometer (nm) to 2500 nm) for qualitative or quantitative chemical analysis. In some aspects, the measured absorbance spectrum comprises at least one wavelength in the range from about 800 nm to 2500 nm. In further aspects, the measured absorbance spectrum comprises at least one wavelength in the range from about 1500 nm to 2000 nm. In still further aspects, the absorbance spectrum comprises multiple wavelengths. In yet further aspects, the absorbance spectrum comprises an entire absorption band.

In various further aspects, the absorbance spectrum is measured directly from the polycondensation mixture, thereby eliminating the need to collect samples for laboratory analysis. In a further aspect, the absorbance spectrum is continuously measured in real-time. In a still further aspect, the absorbance spectrum is obtained by directly contacting the polycondensation reaction mixture with a NIR probe, and optically transferring the spectroscopic data to a NIR spectrometer.

In some aspects, the NIR probe is located within a process vessel, for example, inside an initial mixing drum. In other aspects, the NIR probe is located within a recirculation loop, for example, in a bypass line. In this aspect, polycondensation reaction mixture from a process vessel enters the recirculation loop, then enters the bypass line for direct analysis and loops directly back through a return line to the process vessel after analysis. For example, as illustrated in Figure 2, feed 12 can be fed to a monomers mixing drum 12 with an NIR probe 14 located within the monomers mixing drum 10 where the NIR probe can be connected to an NIR spectrometer 16. Polycondensatio reaction mixture from monomers mixing drum 10 can exit the drum 10 through line 1 where it can proceed through blower 18 and then through line 2. As illustrated in Figure 3, feed 12 can be fed to monomers mixing drum 10 where it can exit as a polycondensation reaction mixture and can proceed thorugh line 1 to blower 18 and through line 2 into recirculation loop 20. From there, the polycondensation reaction mixture can enter a bypass line 22 for direct analysis and can loop directly back into monomers mixing drum 10 through a return line 24.

In some aspects, the absorbance spectrum will comprise NIR molecular overtones and combined absorption bands that are very broad. That is, absorption bands specific to chemical components will overlap, leading to complex spectra and making it difficult to assign specific features to specific chemical components. To this end, the disclosed methods utilize mathematical analysis techniques to extract the desired chemical information from the absorbance

spectrum data.

In further aspects, one wavelength is used to determine a concentration of one or more reaction components. When one wavelength is used, concentrations of reaction components are determined using mathematical analysis techniques comprising univariate analysis. In other aspects, multiple wavelengths are used to determine a concentration of one or more reaction components. When multiple wavelengths are used, reaction component concentrations are determined using mathematical analysis techniques comprising multivariate analysis.

In another aspect, multivariate analysis comprises principal components analysis, partial least squares analysis, artificial neural networks analysis, linear multivariate analysis, or nonlinear multivariate analysis.

In a further aspect, one or more steps involved in determining the concentration of reaction components are performed using computer software. In a still further aspect, the computer software can comprise any computer software suitable for use in performing calculations employed in determining concentrations of reaction components. Non-limiting examples of computer software include MATLAB, TQ Analyst Quantification Software, and MINITAB.

Thus, in further aspects, analyzing the polycondensation reaction mixture comprises irradiating the polycondensation reaction mixture with at least one wavelength of near infrared radiation and measuring the absorbance spectrum of the polycondensation reaction mixtures, and determining a concentration of at least one reaction component comprises correlating absorbance values to a concentration of a reaction component.

In further aspects, the methods use the determined concentration to compare with a predefined standard concentration to determine whether the determined concentration meets a predefined standard concentration. In one aspect, the predefined standard concentration is derived from the determined concentration of a known reference sample reacted under substantially the same reaction conditions and duration.

In various further aspects, the predefined standard concentration is indicative of the threshold for an acceptable value or range, and is sometimes referred to as the lower specification limit (LSL). Polycondensation reaction mixtures above or within the predefined standard concentration meets specification and is acceptable. Polycondensation reaction mixtures falling below or outside of the predefined standard concentration is out of specification and is unacceptable, and generally results in out of specification material. The specific predefined standard concentration depends on the desired polycondensation product properties, for example, molecular weight, glass transition temperature and physical properties, and can be determined by one skilled in the art.

In some aspects, the predefined standard concentration can comprise a concentration of a reaction component, for example, a minimum concentration of a reaction product, or a maximum concentration of a starting reactant. In other aspects, the predefined standard concentration can comprise a percent conversion or degree of conversion of a starting reactant, for example, a minimum degree of conversion of a polycondensation reactant.

In one aspect, the predefined standard concentration is the concentration of BPA remaining in the polycondensation reaction mixture after a time "T". In another aspect, the determined concentration of a reaction component is used to calculate a degree of conversion for time "T" using the predetermined concentration of the reaction in the initial polycondensation reaction mixture. In a further aspect, the predefined standard concentration is percent conversion of BPA in the polycondensation reaction mixture after a time "T", for example, a BPA conversion of at least 65%.

In other aspects, determining whether the determined concentration satisfies a predefined standard concentration comprises comparing the degree of conversion exhibited by a polycondensation reactant with the degree of conversion of a known reference sample tested under substantially the same reaction conditions.

In various further aspects, determining whether the determined concentration satisfies a predefined standard concentration can comprise a qualitative or quantitative assessment. For example, using a qualitative assessment, cross-polymerization between a non-reactive polycondensation reactant can be detected by comparing the time-concentration profile with that of a reference counterpart used as a standard. In another aspect, a quantitative assessment can comprise the degree of conversion of a polycondensation reactant after a predetermined reaction temperature and duration, for example, the degree of conversion of BPA after two hours reaction at 180°C.

According to aspects of the invention, the disclosed process provides early, real-time determination of the reactivity status of a given polycondensation reaction mixture using the composition of the polycondensation reaction mixture. In further aspects, reactivity describes the capability of a polycondensation reactant to react according to a given time-concentration pattern which is considered to be acceptable or representative of a good reaction. In still further aspects, early determination of the reactivity status allows for open and closed loop reactivity control strategies employing quick adjustment of manufacturing parameters to avoid generation of out of specification material.

In other aspects, comparing the determined concentration of the reaction components to a predefined standard concentration values provides a real-time reactivity status of the polycondensation reaction mixture. In further aspects, the reactivity status can be prognostic of the polycondensation reaction mixture ability to react according to a predefined time-concentration pattern.

In further aspects, reactivity status can be used to determine deactivation kinetics of a polycondensation reaction mixture that comprises previously untested polycondensation reactants. In still further aspects, the reactivity status can permit determination of the effect on reactivity from impurities formed from the polycondensation reactants during the

polycondensation reaction. In yet further aspects, the reactivity status can thus be used to determine real-time process control strategies needed to overcome impurity influence on deactivation kinetics.

In some aspects, real-time process control strategies comprise adjusting the predetermined concentration of at least one catalyst present in the polycondensation reaction mixture. In one aspect, adjustment of the catalyst comprises increasing the concentration of at least one catalyst. In another aspect, adjustment of the catalyst comprises increasing multiple catalysts. In other aspects, adjustment of the catalyst comprises decreasing the concentration of at least one catalyst. In yet another aspect, adjustment of the catalyst comprises decreasing multiple catalysts.

In further aspects, the catalyst concentration is adjusted while the concentration of the starting polycondensation reactants, for example, the aromatic dihydroxy compound and diaryl carbonate ester, are kept constant. In a still further aspect, after the catalyst is adjusted, the polycondensation reaction mixture is then resubjected for a time "T" to the conditions as described herein, then reanalyzed as described herein to determine a concentration of at least one reaction component present in the polycondensation reaction mixture, and the determined concentration is reevaluated to determine whether the determined concentration satisfies the predefined standard concentration. In a yet further aspect, these steps can be repeated until the determined concentration of the reaction component satisfies the predefined standard concentration. In another aspect, the disclosed methods can determine the extent of catalyst correction needed to maintain a reaction according to acceptable time-concentration profile.

In further aspect, the disclosed methods and systems provide improved measurement accuracy while reducing the total analysis time. In a further aspect, the disclosed methods and systems exhibit a Gage repeatability and reproducibility (GRR) of less than or equal to 30%. In a still further aspect, the Gage repeatability and reproducibility (GRR) is less than or equal to 25%.

In various aspects, the present invention also relates to a system for making a melt polymerization product. In further aspects, disclosed herein is a system for making a melt polymerization polycondensation product comprising: a) a reaction unit; b) at least one dispensing unit for dispensing an aromatic dihydroxy compound, a diaryl carbonate ester, and at least one catalyst at a predetermined concentration to provide a first polycondensation reaction mixture; c) a means for subjecting the first polycondensation reaction mixture for a time "T" to conditions effective to result in a formation of a second polycondensation reaction mixture, comprising at least one polycondensation product; d) a near infrared spectrometer unit configured to analyze the second polycondensation reaction mixture after time "T" with near infrared spectroscopy to determine an absorbance spectrum of the second polycondensation reaction mixture; e) a computing device unit configured to determine a concentration of at least one reaction component present in the second polycondensation reaction mixture from the absorbance spectrum; and f) a means for comparing the determined concentration of the at least one reaction component to a predefined standard concentration to determine whether the determined concentration satisfies the predefined standard concentration; wherein when the determined concentration does not satisfy the predefined standard concentration, the predetermined concentration of the at least one catalyst present in the first reaction mixture is adjusted and steps b) through e) are repeated.

In various aspects, the system comprises at least one reaction unit. In further aspects, the reaction unit comprises components involved in the melt polymerization of polycarbonates. Generally, in the melt polymerization process, polycarbonates are prepared by co-reacting, in a molten state, the dihydroxy reactant(s) (i.e., isosorbide, aliphatic diol and/or aliphatic diacid, and any additional dihydroxy compound) and a diaryl carbonate ester, such as diphenyl carbonate, or more specifically in an aspect, an activated carbonate such as bis(methyl salicyl)carbonate, in the presence of at least one catalyst. The reaction can be carried out in typical polymerization equipment, such as one or more continuously stirred reactors (CSTRs), plug flow reactors, wire wetting fall polymerizers, free fall polymerizers, wiped film polymerizers, BANBURY® mixers, single or twin screw extruders, or combinations of the foregoing. In one aspect, volatile monohydric phenol can be removed from the molten reactants by distillation and the polymer is isolated as a molten residue.

In another aspect, the system comprises at least one dispensing unit for metering, dosing, and dispensing of the polycondensation reactants. In a further aspect, the dispensing unit comprises a gravimetric dispensing system or a volumetric dispensing system. In a still further aspect, the polycondensation reactants are dispensed in the reaction vessels simultaneously or successively.

In various aspects, the system comprises a means for controlling the reaction conditions of the reaction unit, for example, by controlling temperature or pressure. In one aspect, the system comprises a means for subjecting polycondensation reaction mixtures to conditions effective to result in a formation of polycondensation reaction mixtures comprising a polycondensation product, for example, a means for controlling temperature or pressure. In a further aspect, the first polycondensation reaction mixtures are subject to conditions effective to result in a formation of second polycondensation reaction mixtures.

In a further aspect, the system comprises a means for subjecting polycondensation reaction mixtures to conditions effective to terminate the reaction, for example, using a means for controlling temperature or pressure. In a still further aspect, all the polycondensation reaction mixtures are simultaneously subjected to same reaction conditions. In a yet further aspect, all the polycondensation reaction mixtures are simultaneously subjected to conditions effective to terminate the reaction. Depending on the total reaction time, the resulting polycondensation reaction mixture can comprise

unreacted starting reactants, chemical intermediates, reaction by-products, or end products, or combinations thereof.

In a further aspect, the means for controlling temperature or pressure comprise a temperature control unit or a pressure control unit, respectively. In a still further aspect, the temperature control unit comprises a heating unit, or a cooling unit, or a combination thereof.

In another aspect, the means for subjecting the polycondensation reaction mixtures to conditions effective results in formation of at least one polycarbonate polycondensation product. In a further aspect, conditions effective comprise reaction conditions of a melt polymerization reaction, for example, reaction conditions and components involved in the melt polymerization of polycarbonates.

In a further aspect, the means for subjecting to conditions effective comprises an admixing unit. In this aspect, the admixing unit shakes or agitates the reaction unit or reaction vessels to cause mixing of the polycondensation reactants and formation of a polycondensation reaction mixture.

In a further aspect, the admixing unit comprises a means for stirring the plurality of polycondenstion reaction mixtures. In a still further aspect, the means for stirring comprises a plurality of stirring instruments. In a yet further aspect, each of the plurality of stirring instruments corresponds to a reaction vessel.

In another aspect, the means for subjecting to conditions effective comprise a temperature control unit. In a further aspect, the temperature control unit comprises a heating unit, or a cooling unit, or a combination thereof.

In a further aspect, the heating unit comprises a heating element. Non-limiting examples of suitable heating element include heat plates, heat lamps, and and heating baths using suitable heat transfer media, for example, using hot water, hot oil, or fluidized sand.

In a further aspect, the cooling unit comprises a cooling element. The cooling element can comprise any cooling element suitable for use in terminating a reaction. Non-limiting examples of cooling elements include refrigerated baths using cooling transfer media, for example, using chilled water, brine, freon, ammonia or sublimating solid carbon dioxide.

In other aspects, the system comprises a near infrared spectrometer unit configured to analyze the polycondensation reaction mixtures. In various further aspects, the absorbance spectrum is measured directly from the polycondensation mixture, thereby eliminating the need to collect samples for laboratory analysis. In a further aspect, the absorbance spectrum is continuously measured in real-time. In a still further aspect, the absorbance spectrum is obtained by directly contacting the polycondensation reaction mixture with a NIR probe, and optically transferring the spectroscopic data to a NIR spectrometer.

In some aspects, the NIR probe is located within a process vessel, for example, inside an initial mixing drum. In other aspects, the NIR probe is located within a recirculation loop, for example, in a bypass line. In this aspect, polycondensation reaction mixture from a process vessel enters the recirculation loop, then enters the bypass line for direct analysis and loops directly back through a return line to the process vessel after analysis.

In some aspects, the absorbance spectrum will comprise NIR molecular overtones and combined absorption bands that are very broad. That is, absorption bands specific to chemical components will overlap, leading to complex spectra and making it difficult to assign specific features to specific chemical components. To this end, the disclosed systems utilize mathematical analysis techniques to extract the desired chemical information from the absorbance spectrum data.

In further aspects, one wavelength is used to determine a concentration of one or more reaction components. When one wavelength is used, concentrations of reaction components are determined using mathematical analysis techniques comprising univariate analysis. In other aspects, multiple wavelengths are used to determine a concentration of one or more reaction components. When multiple wavelengths are used, reaction component concentrations are determined using mathematical analysis techniques comprising multivariate analysis.

In one aspect, the near infrared spectrometer unit is configured to analyze a single reaction vessel. In a further aspect, the near infrared spectrometer unit is configured to analyze a plurality of reaction vessels. In still a further aspect, the NIR spectrometer unit is configured to analyze the plurality of reaction vessels simultaneously or in parallel.

In further aspects, the NIR unit is configured to determine absorbance spectrum or spectroscopic data which are evaluated as described herein. In one aspect, the absorbance spectrum measured by the NIR spectrometer unit comprises at least one wavelength in the range of from 800 nm to 2500 nm. In a further aspect, the absorbance spectrum comprises at least one wavelength in the range of from 1500 nm to 2000 nm.

In other aspects, the absorbance spectrum comprises multiple wavelengths. In still further aspects, the absorbance spectrum comprises an entire absorption band.

In another aspect, the NIR spectrometer unit is configured to irradiate the polycondensation reaction mixtures with at least one wavelength of near infrared radiation and configured to determine the absorbance spectrum of the polycondensation reaction mixtures.

In various aspects, the system comprises a computing device unit configured to receive the determined absorbance spectrum data from the NIR spectroscopic unit. In further aspects, the computing device unit is configured to perform mathematical analysis of the determined absorbance spectrum to extract chemical information. In still further aspects, the chemical information comprises the concentration of at least one reaction component present in a polycondensation reaction mixture. Thus, in other aspects, the mathematical analysis comprises determining the concentration of at least one reaction component using the determined absorbance spectrum.

In another aspect, the computing device unit comprises computing hardware and software for performing mathematical analysis of the absorbance spectrum to extract chemical information. In a further aspect, the software performs one or more steps relating to application of mathematical analysis techniques to extract chemical information.

In a further aspect, the software can comprise any computer software suitable for use in performing calculations employed in determining concentrations of reaction components. Non-limiting examples of computer software include MATLAB, TQ Analyst Quantification Software, and MINITAB.

In some aspects, the computing device unit uses one wavelength of the absorbance spectrum to determine a concentration of at least one reaction component. In further aspects, determining the concentration of at least one reaction component using one wavelength comprises univariate analysis.

In other aspects, the computing device unit uses multiple wavelengths to determine the concentration of at least one reaction component. In yet further aspect, determining the concentration of at least one reaction components comprises multivariate analysis. In still further aspects, multivariate analysis comprises neural networks analysis, principal components analysis, partial least squares analysis, linear multivariate analysis, or nonlinear multivariate analysis.

In various aspects, the time "T" comprises the total reaction time. In other aspects, the time "T" can be from about 30 minutes to about 360 minutes and all subranges there between. In the absence of non-reactive starting reactants or catalyst deactivation, the reaction conditions will generally ensure that the starting reactants react to give polycondensation products, for example, polycarbonates products, having the desired molecular weight, glass transition temperature and physical properties.

According to various aspects of the disclosure, the polycondensation reaction mixture is analyzed after time "T" to determine an absorbance spectrum of the polycondensation reaction mixture. In some aspects, the polycondensation reaction mixture is analyzed during a formulation or prepolymerization stage, for example, while in an initial mixture tank. In further aspects, the polycondensation reaction mixture is analyzed prior to reaching a high viscosity and/or molecular weight, so as to prevent generation of out of specification material.

In various aspects, the present invention pertains to and includes at least the following aspects.

Aspect 1 : A method for making a melt polymerization polycondensation product, comprising the steps of: a) providing a first polycondensation reaction mixture comprising an aromatic dihydroxy compound, a diaryl carbonate ester, and at least one catalyst at a predetermined concentration; b) subjecting the first polycondensation reaction mixture for a time "T" to conditions effective to result in a formation of a second polycondensation reaction mixture, comprising at least one polycondensation product; c) analyzing the second polycondensation reaction mixture after time "T" with near infrared spectroscopy to determine an absorbance spectrum of the second polycondensation reaction mixture; d) determining a concentration of at least one reaction component present in the second polycondensation reaction mixture from the absorbance spectrum; and e)comparing the determined concentration of the at least one reaction component to a predefined standard concentration to determine whether the determined concentration satisfies the predefined standard concentration; wherein when the determined concentration does not satisfy the predefined standard concentration, the predetermined concentration of the at least one catalyst present in the first reaction mixture is adjusted and steps b) through e) are repeated.

Aspect 2: The method of aspect 1, wherein the aromatic dihydroxy compound comprises bisphenol A (BPA).

Aspect 3: The method according to any preceding aspect, wherein the diaryl carbonate ester comprises diphenyl carbonate (DPC).

Aspect 4: The method according to any preceding aspect, wherein the polycondensation reaction mixture comprises a polycarbonate polymerization reaction mixture.

Aspect 5: The method according to any preceding aspect, wherein conditions effective comprise reaction conditions sufficient to support reacting of polycondensation reactants.

Aspect 6: The method according to any preceding aspect, wherein conditions effective comprise reaction conditions of a melt polymerization reaction.

Aspect 7: The method according to any preceding aspect, wherein time "T" is from about 30 minutes to about 360 minutes.

Aspect 8: The method according to any preceding aspect, wherein time "T" is from about 60 minutes to about 120 minutes.

Aspect 9: The method according to any preceding aspect, wherein the process is performed during a prepolymerization stage.

Aspect 10: The method according to any preceding aspect, wherein the polycondensation product comprises an oligomer.

Aspect 11: The method according to any preceding aspect, wherein the polycondensation product comprises a polycarbonate product or intermediate polycarbonate product.

Aspect 12: The method according to any preceding aspect, wherein method is performed in at least one process

vessel.

Aspect 13: The method according to any preceding aspect, wherein method is performed in one process vessel.

Aspect 14: The method according to any preceding aspect, wherein analyzing comprises irradiating the second polycondensation reaction mixture with at least one wavelength of near infrared radiation and measuring the absorbance spectrum of the second polycondensation reaction mixture.

Aspect 15: The method according to any preceding aspect, wherein analyzing comprises contacting the second polycondensation reaction mixture with a NIR probe.

Aspect 16: The method according to any preceding aspect, wherein the probe is located inside a process vessel.

Aspect 17: The method according to any preceding aspect, wherein the process vessel comprises a mixing drum or tank.

Aspect 18: The method according to any preceding aspect, wherein the process vessel comprises a batch reactor, continuous stirred tank reactor, or continuous flow reactor, or combinations thereof.

Aspect 19: The method according to any preceding aspect, wherein the probe is located in a recirculation loop.

Aspect 20: The method according to any preceding aspect, wherein the recirculation loop is attached to a process vessel.

Aspect 21: The method according to any preceding aspect, wherein the absorbance spectrum comprises at least one wavelength in the range of from 800 nm to 2500 nm.

Aspect 22: The method according to any preceding aspect, wherein the absorbance spectrum comprises at least one wavelength in the range of from 1500 nm to 2000 nm.

Aspect 23: The method according to any preceding aspect, wherein the absorbance spectrum comprises multiple wavelengths.

Aspect 24: The method according to any preceding aspect, wherein the absorbance spectrum comprises at least one entire absorption band.

Aspect 25: The method according to any preceding aspect, wherein the reaction component comprises starting reactants, chemical intermediates, reaction by-products, or end products, or combinations thereof.

Aspect 26: The method according to any preceding aspect, wherein the reaction component comprises bisphenol A, diphenyl carbonate, an oligomer, phenol, or a polycarbonate polymer, or combinations thereof.

Aspect 27: The method according to any preceding aspect, wherein the reaction component is present in an amount from greater than 0 weight % to about 100 weight % of polycondensation reaction mixture.

Aspect 28: The method according to any preceding aspect, wherein the reaction component comprises DPC.

Aspect 29: The method according to any preceding aspect, wherein the reaction component comprises BPA.

Aspect 30: The method according to any preceding aspect, wherein the reaction component comprises phenol.

Aspect 31: The method according to any preceding aspect, wherein one wavelength is used to determine a concentration of one or more reaction components.

Aspect 32: The method according to any preceding aspect, wherein determining a concentration of at least one reaction component comprises univariate analysis.

Aspect 33: The method according to any preceding aspect, wherein multiple wavelengths are used to determine a concentration of one or more reaction components.

Aspect 34: The method according to any preceding aspect, wherein determining a concentration of at least one reaction component comprises multivariate analysis.

Aspect 35: The method according to any preceding aspect, wherein multivariate analysis comprises neural networks analysis, principal components analysis, partial least squares analysis, linear multivariate analysis, or nonlinear multivariate analysis.

Aspect 36: The method according to any preceding aspect, wherein at least one step in determining a concentration of one or more reaction components is performed using computer software.

Aspect 37: The method according to any preceding aspect, wherein the predefined standard concentration is derived from the determined concentration of a known reference sample reacted under substantially the same reaction conditions and duration.

Aspect 38: The method according to any preceding aspect, wherein determining whether the determined concentration satisfies a predefined standard concentration comprises comparing the degree of conversion exhibited by a polycondensation reactant with the degree of conversion of a known reference sample tested in substantially the same reaction conditions.

Aspect 39: The method according to any preceding aspect, wherein determining whether the determined concentration satisfies a predefined standard concentration comprises a qualitative assessment.

Aspect 40: The method according to any preceding aspect, wherein determining whether the determined concentration satisfies a predefined standard concentration comprises a quantitative assessment.

Aspect 41: The method according to any preceding aspect, wherein when the determined concentration does not satisfy the predefined standard concentration, the predetermined concentration of the at least one catalyst present

in the first reaction mixture is increased and steps b) through e) are repeated.

Aspect 42: The method according to any preceding aspect, wherein when the determined concentration does not satisfy the predefined standard concentration, the predetermined concentration of the at least one catalyst present in the first reaction mixture is decreased and steps b) through e) are repeated.

Aspect 43: The method according to any preceding aspect, wherein the Gage repeatability and reproducibility (GRR) is less than or equal to 30%.

Aspect 44: The method according to any preceding aspect, wherein the Gage repeatability and reproducibility (GRR) is less than or equal to 25%.

Aspect 45: A system for making a melt polymerization polycondensation product comprising: a) a reaction unit; b) at least one dispensing unit for dispensing an aromatic dihydroxy compound, a diaryl carbonate ester, and at least one catalyst at a predetermined concentration to provide a first polycondensation reaction mixture; c)a means for subjecting the first polycondensation reaction mixture for a time "T" to conditions effective to result in a formation of a second polycondensation reaction mixture, comprising at least one polycondensation product; d) a near infrared spectrometer unit configured to analyze the second polycondensation reaction mixture after time "T" with near infrared spectroscopy to determine an absorbance spectrum of the second polycondensation reaction mixture; e) a computing device unit configured to determine a concentration of at least one reaction component present in the second polycondensation reaction mixture from the absorbance spectrum; and f) a means for comparing the determined concentration of the at least one reaction component to a predefined standard concentration to determine whether the determined concentration satisfies the predefined standard concentration; wherein when the determined concentration does not satisfy the predefined standard concentration, the predetermined concentration of the at least one catalyst present in the first reaction mixture is adjusted and steps b) through e) are repeated.

Aspect 46: The system of aspect 45, wherein the reaction unit comprises at least one reaction vessel.

Aspect 47: The system according to any preceding system aspect, wherein the reaction vessel comprises a process vessel.

Aspect 48: The system according to any preceding system aspect, wherein the process vessel comprises a mixing drum.

Aspect 49: The system according to any preceding system aspect, wherein the dispensing unit comprises a gravimetric dispensing system or a volumetric dispensing system.

Aspect 50: The system according to any preceding system aspect, wherein the polycondensation reactants are dispensed in the reaction vessel simultaneously or successively.

Aspect 51: The system according to any preceding system aspect, wherein the means for simultaneously subjecting to conditions effective comprises an admixing unit.

Aspect 52: The system according to any preceding system aspect, wherein the admixing unit shakes or agitates the reaction unit or reaction vessel to cause mixing of the polycondensation reactants.

Aspect 53: The system according to any preceding system aspect, wherein the admixing unit comprises a means for stirring the polycondenstion reaction mixture.

Aspect 54: The system according to any preceding system aspect, wherein the means for subjecting to conditions effective comprise a temperature control unit.

Aspect 55: The system according to any preceding system aspect, wherein the temperature control unit comprises a heating unit, or a cooling unit, or a combination thereof.

Aspect 56: The system according to any preceding system aspect, wherein the heating unit comprises a heating element.

Aspect 57: The system according to any preceding system aspect, wherein the heating element comprises a heat plate, heat lamp, or heating bath.

Aspect 58: The system according to any preceding system aspect, the cooling unit comprises a cooling element.

Aspect 59: The system according to any preceding system aspect, wherein the cooling element comprises a refrigerated bath.

Aspect 60: The system according to any preceding system aspect, wherein the near infrared spectrometer unit is configured to analyze a single reaction mixture sample.

Aspect 61: The system according to any preceding system aspect, wherein the NIR spectrometer unit is configured to analyze a plurality of reaction mixture samples.

Aspect 62: The system according to any preceding aspect, wherein the NIR spectrometer unit further comprises a NIR probe.

Aspect 63: The system according to any preceding system aspect, wherein the NIR probe is located within a process vessel.

Aspect 64: The system according to any preceding system aspect, wherein the NIR probe is located within a mixing drum.

Aspect 65: The system according to any preceding system aspect, wherein the NIR probe is located within a

recirculation loop or bypass line.

Aspect 66: The system according to any preceding system aspect, wherein the polycondensation reaction mixture from a process vessel enters the recirculation loop, then enters the bypass line for direct analysis and loops directly back through a return line to the process vessel after analysis.

Aspect 67: The system according to any preceding system aspect, wherein NIR spectrometer unit is configured to analyze the plurality of reaction vessels simultaneously or in parallel.

Aspect 68: The system according to any preceding system aspect, wherein the NIR unit is configured to provide measured absorbance or spectroscopic data.

Aspect 69: The system according to any preceding system aspect, wherein the NIR spectrometer unit is configured to irradiate the polycondensation reaction mixture with at least one wavelength of near infrared radiation and configured to determine the absorbance spectrum of the polycondensation reaction mixture.

Aspect 70: The system according to any preceding system aspect, wherein the NIR spectrometer unit is configured to measure the absorbance spectrum continuously in real-time.

Aspect 71: The system according to any preceding system aspect, wherein the absorbance spectrum is obtained by directly contacting the polycondensation reaction mixture with a NIR probe, and optically transferring the spectroscopic data to a NIR spectrometer.

Aspect 72: The system according to any preceding system aspect, wherein the absorbance spectrum measured by the NIR spectrometer unit comprises at least one wavelength in the range of from 800 nm to 2500 nm.

Aspect 73: The system according to any preceding system aspect, wherein the absorbance spectrum comprises at least one wavelength in the range of from 1500 nm to 2000 nm.

Aspect 74: The system according to any preceding system aspect, wherein absorbance spectrum comprises multiple wavelengths.

Aspect 75: The system according to any preceding system aspect, wherein absorbance spectrum comprises an entire absorption band.

Aspect 76: The system according to any preceding system aspect, wherein the computing device unit is configured to receive the determined absorbance spectrum data from the NIR spectroscopic unit, and configured to perform mathematical analysis of the determined absorbance spectrum to extract chemical information.

Aspect 77: The system according to any preceding system aspect, wherein the chemical information comprises the concentration of at least one reaction component.

Aspect 78: The system according to any preceding system aspect, wherein mathematical analysis comprises determining the concentration of at least one reaction component using the determined absorbance spectrum.

Aspect 79: The system according to any preceding system aspect, wherein the computing device unit comprises computing hardware and software for performing mathematical analysis of the determined absorbance spectrum to extract chemical information.

Aspect 80: The system according to any preceding system aspect, wherein the software performs one or more steps relating to application of mathematical analysis techniques to extract chemical information.

Aspect 81: The system according to any preceding system aspect, wherein one wavelength of the absorbance spectrum is used to determine a concentration of at least one reaction component.

Aspect 82: The system according to any preceding system aspect, wherein determining the concentration of at least one reaction component comprises univariate analysis.

Aspect 83: The system according to any preceding system aspect, wherein multiple wavelengths are used to determine the concentration of at least one reaction component.

Aspect 84: The system according to any preceding system aspect, wherein determining the concentration of at least one reaction components comprises multivariate analysis.

Aspect 85: The system according to any preceding system aspect, wherein multivariate analysis comprises neural networks analysis, principal components analysis, partial least squares analysis, linear multivariate analysis, or nonlinear multivariate analysis.

Aspect 86: The system according to any preceding system aspect, wherein comparing comprises comparing the degree of conversion exhibited by a polycondensation reactant with the degree of conversion of a known reference sample tested in substantially the same reaction conditions.

Aspect 87: The system according to any preceding system aspect, wherein intrinsic reactivity is used to determine deactivation kinetics of the polycondensation reaction mixture.

Aspect 88: The system according to any proceeding system aspect, wherein time "T" is in a range from about 1 minute to about 360 minutes.

Aspect 89: The system according to any preceding system aspect, wherein at least a portion of the system is automated.

Aspect 90: The system according to any preceding system aspect, wherein at least a portion of steps are performed by a robotic device.

Aspect 91: The system according to any preceding system aspect, wherein at least a portion of the system is electrically powered.

Without further elaboration, it is believed that one skilled in the art can, using the description herein, utilize the present invention. The following examples are included to provide addition guidance to those skilled in the art of practicing the claimed invention. The examples provided are merely representative of the work and contribute to the teaching of the present invention. Accordingly, these examples are not intended to limit the invention in any manner.

While aspects of the present invention can be described and claimed in a particular statutory class, such as the system statutory class, this is for convenience only and one of skill in the art will understand that each aspect of the present invention can be described and claimed in any statutory class. Unless otherwise expressly stated, it is in no way intended that any method or aspect set forth herein be construed as requiring that its steps be performed in a specific order. Accordingly, where a method claim does not specifically state in the claims or descriptions that the steps are to be limited to a specific order, it is no way intended that an order be inferred, in any respect. This holds for any possible non-express basis for interpretation, including matters of logic with respect to arrangement of steps or operational flow, plain meaning derived from grammatical organization or punctuation, or the number or type of aspects described in the specification.

EXAMPLES

The following examples are put forth so as to provide those of ordinary skill in the art with a complete disclosure and description of how the compounds, compositions, articles, devices and/or methods claimed herein are made and evaluated, and are intended to be purely exemplary and are not intended to limit the disclosure. Efforts have been made to ensure accuracy with respect to numbers (e.g., amounts, temperature, etc.), but some errors and deviations should be accounted for. Unless indicated otherwise, parts are parts by weight, temperature is in °C or is at ambient temperature, and pressure is at or near atmospheric. Unless indicated otherwise, percentages referring to composition are in terms of wt%.

There are numerous variations and combinations of reaction conditions, e.g., component concentrations, desired solvents, solvent mixtures, temperatures, pressures and other reaction ranges and conditions that can be used to optimize the product purity and yield obtained from the described process. Only reasonable and routine experimentation will be required to optimize such process conditions.

The materials shown in Table 1 were used to prepare the compositions described and evaluated herein.

Table 1.

| Item | Description | Supplier |
|---|---|---|
| BPA | Bisphenol A | SABIC IP |
| DPC | Diphenyl carbonate | SABIC IP |
| KOH | Potassium hydroxide | Sigma Aldrich |

In each of the examples, the samples described herein were prepared in a 250 ml three necked flask reactor. The flask was charged with measured amounts of DPC and BPA. Next, 0.001 N KOH solution were added, where "N" referns to the normality and is measured in grams per liter (g/L). After assembly, the flask was sealed and placed in an oil bath. Next, the air in the headspace was exchanged multiple times using alternating cycles of vacuum and nitrogen filling. Following the final nitrogen exchange, the bath temperature was increased to 180 °C. Once the flask achieved the target temperature, a timer was started to log reaction time. Samples were taken at 30, 60, 90 and 120 minutes. Finally, temperature was raised to 205 °C and an additional sample was extracted after an additional 30 min. All samples were allowed to cool down to room temperature and analyzed using the techniques and systems described herein.

HPLC Analysis (High Performance Liquid Chromatography) of the polycondensation reaction mixture samples described herein was performed using a Waters X-Terra C18 column (Waters, Milford, MA) with dimensions of 150 x 2.1 millimeters (mm) with 0.2% acetic acid (phase A) and acetonitrile (phase B) as the mobile phase. Gradient elution was as follows: 0 min and 40% B, 3 min and 40% B, 40 min and 100% B and 45% and 100% B at a flow of 1 milliLiters per minute (mL/min). The detector used was a UV-Visible diode array at a constant wavelength of 245 nm.

Near infrared spectra for each polycondensation reaction mixture sample described herein was obtained using a Bomem MB160 Near-IR Spectrometer. Spectrometer parameters were set for open beam experiment, using the spectra range of 4000-10000 inverse centimeters ($cm^{-1}$) and with a 4$cm^{-1}$ resolution. Each sample was heated to 80°C and measured directly in a stationary cell with no solvent intervention.

Mathematical analysis as described herein was performed using TQ analyst quantification software. Principal component analysis was conducted for the 3 major components for each polycondensation reaction mixture sample

described herein. Briefly, Principal Component Analysis is a mathematical analysis procedure that uses an orthogonal transformation to convert a set of observations of possibly correlated variables into a set of values of linearly uncorrelated variables called principal components. Principal component analysis was performed by using TQ analyst quantification software.

GRR was calculated using GRR was calculated using the equation:

$$GRR(\%) = \frac{5.15\sigma_m}{T} \times 100,$$

where $\sigma_m$ is the standard deviation of a series of measurements conducted by different assays on the same sample and T is the tolerance of the measurement. When the number of samples used in the measurement is below 10, the standard deviation should be estimated by:

$$\sigma_m \approx \frac{R_{avg}}{d^*},$$

where $R_{avg}$ is the average of the ranges in the measurements between assays and d* is a parameter which is a function of the number of assays and the number of samples used to conduct the repeatability test.

BPA conversion was calculated using the following formula:

$$BPA\ conversion\ (\%) = 100 \times \left(1 - \frac{Final\ BPA\ concentration}{Initial\ BPA\ concentration}\right).$$

Example 1

In Example 1, synthetic mixtures of BPA, DPC, phenol and oligomers with compositions ranging from 0 - 30% weight BPA were prepared as described herein. Specifically, the reactor was charged with 117.7 g of DPC and 114 g of BPA. Next, 0.6 ml of 0.001 N KOH solution was added, and placed in an oil bath. Samples were taken at 30, 60, 90 and 120 minutes. Finally, the temperature was raised to 205 °C and a final sample was extracted after an additional 30 minutes (min). An aliquot from each time interval was analyzed using HPLC analysis as described herein. Next, an aliquot from each sample was analyzed for composition but using NIR spectroscopy methods described herein. Principal component analysis of three major components (phenol, BPA and DPC) were performed as described for each of the samples. Results for three replicates of each sample performed using NIR analysis and HPLC analysis are provided in Table 2 below.

Table 2*.

| Time (min) | BPA | | DPC | | PhOH | |
|---|---|---|---|---|---|---|
| | HPLC | NIR | HPLC | NIR | HPLC | NIR |
| 30 | 25.16 | 25.25 | 25.43 | 25.59 | 16.27 | 16.01 |
| | 25.16 | 24.65 | 25.43 | 25.12 | 16.27 | 15.62 |
| | 25.16 | 25.12 | 25.43 | 25.33 | 16.27 | 16.3 |
| 60 | 21.25 | 22.61 | 22.84 | 24.02 | 13.94 | 14.35 |
| | 21.25 | 20.15 | 22.84 | 21.48 | 13.94 | 14.00 |
| | 21.25 | 20.82 | 22.84 | 22.29 | 13.94 | 14.27 |
| 90 | 18.49 | 17.85 | 19.54 | 19.71 | 13.03 | 12.72 |
| | 18.49 | 18.66 | 19.54 | 19.13 | 13.03 | 14.06 |
| | 18.49 | 18.65 | 19.54 | 20.05 | 13.03 | 13.29 |

(continued)

| Time (min) | BPA | | DPC | | PhOH | |
|---|---|---|---|---|---|---|
| | HPLC | NIR | HPLC | NIR | HPLC | NIR |
| 120 | 15.92 | 15.23 | 17.34 | 16.35 | 12.28 | 12.42 |
| | 15.92 | 14.51 | 17.34 | 15.91 | 12.28 | 11.70 |
| | 15.92 | 16.46 | 17.34 | 17.86 | 12.28 | 12.13 |
| 150 | 13.88 | 14.98 | 14.70 | 16.02 | 10.20 | 10.43 |
| | 13.88 | 13.83 | 14.70 | 15.83 | 10.20 | 10.09 |
| | 13.88 | 14.70 | 14.70 | 14.44 | 10.20 | 10.17 |

* Amounts provided in terms of percent of total composition (by weight).

Calibration produced a very good correlation between HPLC composition of each component and their NIR absorbance (regression coefficients = 0.9804, 0.9824, 0.9761 for phenol, BPA and DPC, respectively). NIR spectrum 50 and correlation plot 60 for BPA is displayed in Figure 1. Correlation was performed using TQ Analyst quantification software.

Those results, when converted into BPA conversion yield a pooled standard deviation of 1.45 %. If we consider a lower spec limit (LSL) of 65% conversion for an acceptable reactivity test that gives a Gage Repeatability and Reproducibility (GRR) of 21.4%. Scientific community considers GRR below 30% as an acceptable measurement system.

The patentable scope of the invention is defined by the claims, and can include other examples that occur to those skilled in the art. Such other examples are intended to be within the scope of the claims if they have structural elements that do not differ from the literal language of the claims, or if they include equivalent structural elements with insubstantial differences from the literal languages of the claims.

## Claims

**1.** A method for making a melt polymerization polycondensation product, comprising the steps of:

a. providing a first polycondensation reaction mixture comprising an aromatic dihydroxy compound, a diaryl carbonate ester, and at least one catalyst at a predetermined concentration;
b. subjecting the first polycondensation reaction mixture for a time "T" to conditions effective to result in a formation of a second polycondensation reaction mixture, comprising at least one polycondensation product;
c. analyzing the second polycondensation reaction mixture after time "T" with near infrared spectroscopy to determine an absorbance spectrum of the second polycondensation reaction mixture;
d. determining a concentration of at least one reaction component present in the second polycondensation reaction mixture from the absorbance spectrum; and
e. comparing the determined concentration of the at least one reaction component to a predefined standard concentration to determine whether the determined concentration satisfies the predefined standard concentration,

wherein when the determined concentration does not satisfy the predefined standard concentration, the predetermined concentration of the at least one catalyst present in the first reaction mixture is adjusted and steps b) through e) are repeated.

**2.** The method of claim 1, wherein

• the aromatic dihydroxy compound comprises bisphenol A (BPA); and/or.
• the diaryl carbonate ester comprises diphenyl carbonate (DPC).

**3.** The method according to any one of claims 1-2, wherein analyzing comprises irradiating the second polycondensation reaction mixture with at least one wavelength of near infrared radiation and measuring the absorbance spectrum of the second polycondensation reaction mixture.

4. The method according to any one of claims 1-3, wherein time "T" is from about 30 minutes to about 360 minutes.

5. The method according to any one of claims 1-4, wherein analyzing comprises contacting the second polycondensation reaction mixture with a NIR probe.

6. The method according to any one of claims 1-5, wherein the probe is located inside a process vessel or in a recirculation loop attached to a process vessel.

7. The method according to any one of claims 1-6, wherein the absorbance spectrum comprises at least one wavelength in the range of from 800 nm to 2500 nm.

8. The method according to any one of claims 1-7, wherein the reaction component comprises bisphenol A, diphenyl carbonate, an oligomer, phenol, or a polycarbonate polymer, or combinations thereof.

9. The method according to any one of claims 1-8, wherein when the determined concentration does not satisfy the predefined standard concentration, the predetermined concentration of the at least one catalyst present in the first reaction mixture is increased or decreased and steps b) through e) are repeated.

10. A system for making a melt polymerization polycondensation product according to the method of claim 1 comprising:

a. a reaction unit;
b. at least one dispensing unit for dispensing an aromatic dihydroxy compound, a diaryl carbonate ester, and at least one catalyst at a predetermined concentration to provide a first polycondensation reaction mixture;
c. a means for subjecting the first polycondensation reaction mixture for a time "T" to conditions effective to result in a formation of a second polycondensation reaction mixture, comprising at least one polycondensation product;
d. a near infrared spectrometer unit configured to analyze the second polycondensation reaction mixture after time "T" with near infrared spectroscopy to determine an absorbance spectrum of the second polycondensation reaction mixture;
e. a computing device unit configured to determine a concentration of at least one reaction component present in the second polycondensation reaction mixture from the absorbance spectrum; and
f. a means for comparing the determined concentration of the at least one reaction component to a predefined standard concentration to determine whether the determined concentration satisfies the predefined standard concentration, wherein when the determined concentration does not satisfy the predefined standard concentration, the predetermined concentration of the at least one catalyst present in the first reaction mixture is adjusted.

11. The system according to claim 10, wherein the means for subjecting to conditions effective comprise a temperature control unit.

12. The system according to any one of claims 10-11, wherein the NIR spectrometer unit further comprises a NIR probe, wherin the NIR probe is located within a process vessel, a mixing drum, a recirculation loop or bypass line.

13. The system according to any one of claims 10-12, wherein the absorbance spectrum measured by the NIR spectrometer unit comprises at least one wavelength in the range of from 800 nm to 2500 nm.

14. The system according to any one of claims 10-13, wherein time "T" is in a range from about 1 minute to about 360 minutes.

## Patentansprüche

1. Verfahren zur Herstellung eines Schmelzpolymerisations-Polykondensationsprodukts, umfassend die Schritte:

a. Bereitstellen eines ersten Polykondensations-Reaktionsgemischs, das eine aromatische Dihydroxyverbindung, einen Diarylcarbonatester und wenigstens einen Katalysator mit einer vorbestimmten Konzentration umfasst;
b. Unterwerfen des ersten Polykondensations-Reaktionsgemischs für eine Zeit "T" an Bedingungen, die wirksam sind, zu der Entstehung eines zweiten Polykondensations-Reaktionsgemischs, das wenigstens ein Polykondensationsprodukt umfasst, zu führen;
c. Analysieren des zweiten Polykondensations-Reaktionsgemischs nach der Zeit "T" durch Nahinfrarotspektroskopie, um ein Absorbanzspektrum des zweiten Polykondensations-Reaktionsgemischs zu bestimmen;
d. Bestimmen einer Konzentration wenigstens einer in dem zweiten Polykondensations-Reaktionsgemisch vorhandenen Reaktionskomponente aus dem Absorbanzspektrum; und
e. Vergleichen der bestimmten Konzentration der wenigstens einen Reaktionskomponente mit einer vordefinierten Standardkonzentration, um zu bestimmen, ob die bestimmte Konzentration der vordefinierten Standardkonzentration entspricht,

wobei, wenn die bestimmte Konzentration der vordefinierten Standardkonzentration nicht entspricht, die vorbestimmte Konzentration des wenigstens einen in dem ersten Reaktionsgemisch vorhandenen Katalysators eingestellt wird und die Schritte b) bis e) wiederholt werden.

**2.** Verfahren gemäß Anspruch 1, wobei

• die aromatische Dihydroxyverbindung Bisphenol A (BPA) umfasst; und/oder
• der Diarylcarbonatester Diphenylcarbonat (DPC) umfasst.

**3.** Verfahren gemäß einem der Ansprüche 1-2, wobei das Analysieren Bestrahlen des zweiten Polykondensations-Reaktionsgemischs mit wenigstens einer Wellenlänge von Nahinfrarotstrahlung und Messen des Absorbanzspektrums des zweiten Polykondensations-Reaktionsgemischs umfasst.

**4.** Verfahren gemäß einem der Ansprüche 1-3, wobei die Zeit "T" von etwa 30 Minuten bis etwa 360 Minuten beträgt.

**5.** Verfahren gemäß einem der Ansprüche 1-4, wobei das Analysieren Inkontaktbringen des zweiten Polykondensations-Reaktionsgemischs mit einer NIR-Sonde umfasst.

**6.** Verfahren gemäß einem der Ansprüche 1-5, wobei die Sonde innerhalb eines Verfahrensgefäßes oder in einer an dem Verfahrensgefäß angebrachten Rezirkulationsschleife angeordnet ist.

**7.** Verfahren gemäß einem der Ansprüche 1-6, wobei das Absorbanzspektrum wenigstens eine Wellenlänge in dem Bereich von 800 nm bis 2500 nm umfasst.

**8.** Verfahren gemäß einem der Ansprüche 1-7, wobei die Reaktionskomponente Bisphenol A, Diphenylcarbonat, ein Oligomer, Phenol oder ein Polycarbonatpolymer oder Kombinationen davon umfasst.

**9.** Verfahren gemäß einem der Ansprüche 1-8, wobei, wenn die bestimmten Konzentration der vordefinierten Standardkonzentration nicht entspricht, die vorbestimmte Konzentration des wenigstens einen in dem ersten Reaktionsgemisch vorhandenen Katalysators erhöht oder verringert wird und die Schritte b) bis e) wiederholt werden.

**10.** System zur Herstellung eines Schmelzpolymerisations-Polykondensationsprodukts nach dem Verfahren gemäß Anspruch 1, umfassend:

a. eine Reaktionseinheit;
b. wenigstens eine Ausgabeeinheit zum Ausgeben einer aromatischen Dihydroxyverbindung, eines Diarylcarbonatesters und wenigstens eines Katalysators mit einer vorbestimmten Konzentration, um ein erstes Polykondensations-Reaktionsgemisch bereitzustellen;
c. eine Einrichtung zum Unterwerfen des ersten Polykondensations-Reaktionsgemischs für eine Zeit "T" an Bedingungen, die wirksam sind, zu der Entstehung eines zweiten Polykondensations-Reaktionsgemischs, das wenigstens ein Polykondensationsprodukt umfasst, zu führen;
d. eine Nahinfrarotspektrometereinheit, gestaltet zum Analysieren des zweiten Polykondensations-Reaktionsgemischs nach der Zeit "T" durch Nahinfrarotspektroskopie, um ein Absorbanzspektrum des zweiten Polykondensations-Reaktionsgemischs zu bestimmen;
e. eine Computervorrichtung, gestaltet zum Bestimmen einer Konzentration wenigstens einer in dem zweiten Polykondensations-Reaktionsgemisch vorhandenen Reaktionskomponente aus dem Absorbanzspektrum; und
f. eine Einrichtung zum Vergleichen der bestimmten Konzentration der wenigstens einen Reaktionskomponente mit einer vordefinierten Standardkonzentration, um zu bestimmen, ob die bestimmte Konzentration der vordefinierten Standardkonzentration entspricht,

wobei, wenn die bestimmte Konzentration der vordefinierten Standardkonzentration nicht entspricht, die vorbestimmte Konzentration des wenigstens einen in dem ersten Reaktionsgemisch vorhandenen Katalysators eingestellt wird.

**11.** System gemäß Anspruch 10, wobei die Einrichtung zum Unterwerfen an wirksame Bedingung eine Temperartursteuereinheit umfasst.

**12.** System gemäß einem der Ansprüche 10-11, wobei die NIR-Spektrometereinheit ferner eine NIR-Sonde umfasst, wobei die NIR-Sonde innerhalb eines Verfahrensgefäßes, einer Mischtrommel, einer Rezirkulationsschleife oder einer Bypassleitung angeordnet ist.

**13.** System gemäß einem der Ansprüche 10-12, wobei das mit der NIR-Spektrometereinheit gemessene Absorbanzspektrum wenigstens eine Wellenlänge in dem Bereich von 800 nm bis 2500 nm umfasst.

**14.** System gemäß einem der Ansprüche 10-13, wobei die Zeit "T" in einem Bereich von etwa 1 Minute bis etwa 360 Minuten liegt.

## Revendications

**1.** Procédé permettant de fabriquer un produit de polycondensation par polymérisation à l'état fondu, comprenant les étapes consistant à :

a. fournir un premier mélange réactionnel de polycondensation comprenant un composé dihydroxylé aromatique, un ester de type carbonate de diaryle et au moins un catalyseur en une concentration prédéterminée ;
b. soumettre le premier mélange réactionnel de polycondensation pendant un temps « T » à des conditions efficaces pour aboutir à la formation d'un second mélange réactionnel de polycondensation, comprenant au moins un produit de polycondensation ;
c. analyser le second mélange réactionnel de polycondensation au bout du temps « T » par spectroscopie dans le proche infrarouge pour déterminer un spectre d'absorbance du second mélange réactionnel de polycondensation ;
d. déterminer une concentration d'au moins un composant de la réaction présent dans le second mélange réactionnel de polycondensation à partir du spectre d'absorbance ; et
e. comparer la concentration déterminée de l'au moins un composant de la réaction à une concentration standard prédéfinie pour déterminer si la concentration déterminée satisfait à la concentration standard prédéfinie,

dans lequel lorsque la concentration déterminée ne satisfait pas à la concentration standard prédéfinie, la concentration prédéterminée de l'au moins un catalyseur présent dans le premier mélange réactionnel est ajustée et les étapes b) à e) sont répétées.

**2.** Procédé selon la revendication 1, dans lequel

• le composé dihydroxylé aromatique comprend du bisphénol A (BPA) ; et/ou
• l'ester de type carbonate de diaryle comprend du carbonate de diphényle (DPC).

**3.** Procédé selon l'une quelconque des revendications 1-2, dans lequel l'analyse comprend l'exposition à un rayonnement du second mélange réactionnel de polycondensation avec au moins une longueur d'onde du rayonnement du proche infrarouge et la mesure du spectre d'absorbance du second mélange réactionnel de polycondensation.

**4.** Procédé selon l'une quelconque des revendications 1-3, dans lequel le temps « T » est d'environ 30 minutes à environ 360 minutes.

**5.** Procédé selon l'une quelconque des revendications 1-4, dans lequel l'analyse comprend la mise en contact du second mélange réactionnel de polycondensation avec une sonde NIR.

**6.** Procédé selon l'une quelconque des revendications 1-5, dans lequel la sonde est située à l'intérieur d'une cuve de procédé ou dans une boucle de recirculation liée à une cuve de procédé.

7. Procédé selon l'une quelconque des revendications 1-6, dans lequel le spectre d'absorbance comprend au moins une longueur d'onde dans la plage de 800 nm à 2500 nm.

8. Procédé selon l'une quelconque des revendications 1-7, dans lequel le composant de la réaction comprend le bisphénol A, le carbonate de diphényle, un oligomère, le phénol ou un polymère de type polycarbonate ou des associations de ceux-ci.

9. Procédé selon l'une quelconque des revendications 1-8, dans lequel lorsque la concentration déterminée ne satisfait pas à la concentration standard prédéfinie, la concentration prédéterminée de l'au moins un catalyseur présent dans le premier mélange réactionnel est augmentée ou diminuée et les étapes b) à e) sont répétées.

10. Système permettant de fabriquer un produit de polycondensation par polymérisation à l'état fondu selon le procédé de la revendication 1 comprenant :

a. une unité de réaction ;
b. au moins une unité de distribution permettant de distribuer un composé dihydroxylé aromatique, un ester de type carbonate de diaryle et au moins un catalyseur en une concentration prédéterminée pour fournir un premier mélange réactionnel de polycondensation ;
c. un moyen permettant de soumettre le premier mélange réactionnel de polycondensation pendant un temps « T » à des conditions efficaces pour aboutir à la formation d'un second mélange réactionnel de polycondensation, comprenant au moins un produit de polycondensation ;
d. une unité à spectromètre dans le proche infrarouge conçue pour analyser le second mélange réactionnel de polycondensation au bout du temps « T » par spectroscopie dans le proche infrarouge pour déterminer un spectre d'absorbance du second mélange réactionnel de polycondensation ;
e. une unité à dispositif de calcul par ordinateur conçue pour déterminer une concentration d'au moins un composant de la réaction présent dans le second mélange réactionnel de polycondensation à partir du spectre d'absorbance ; et
f. un moyen permettant de comparer la concentration déterminée de l'au moins un composant de la réaction à une concentration standard prédéfinie pour déterminer si la concentration déterminée satisfait à la concentration standard prédéfinie,

dans lequel lorsque la concentration déterminée ne satisfait pas à la concentration standard prédéfinie, la concentration prédéterminée de l'au moins un catalyseur présent dans le premier mélange réactionnel est ajustée.

11. Système selon la revendication 10, dans lequel le moyen permettant de soumettre à des conditions efficaces comprend une unité de régulation de température.

12. Système selon l'une quelconque des revendications 10-11, dans lequel l'unité à spectromètre NIR comprend en outre une sonde NIR, la sonde NIR étant située à l'intérieur d'une cuve de procédé, d'un tambour de mélange, d'une boucle de recirculation ou d'une conduite de dérivation.

13. Système selon l'une quelconque des revendications 10-12, dans lequel le spectre d'absorbance mesuré par l'unité à spectromètre NIR comprend au moins une longueur d'onde dans la plage de 800 nm à 2500 nm.

14. Système selon l'une quelconque des revendications 10-13, dans lequel le temps « T » est dans une plage d'environ 1 minute à environ 360 minutes.

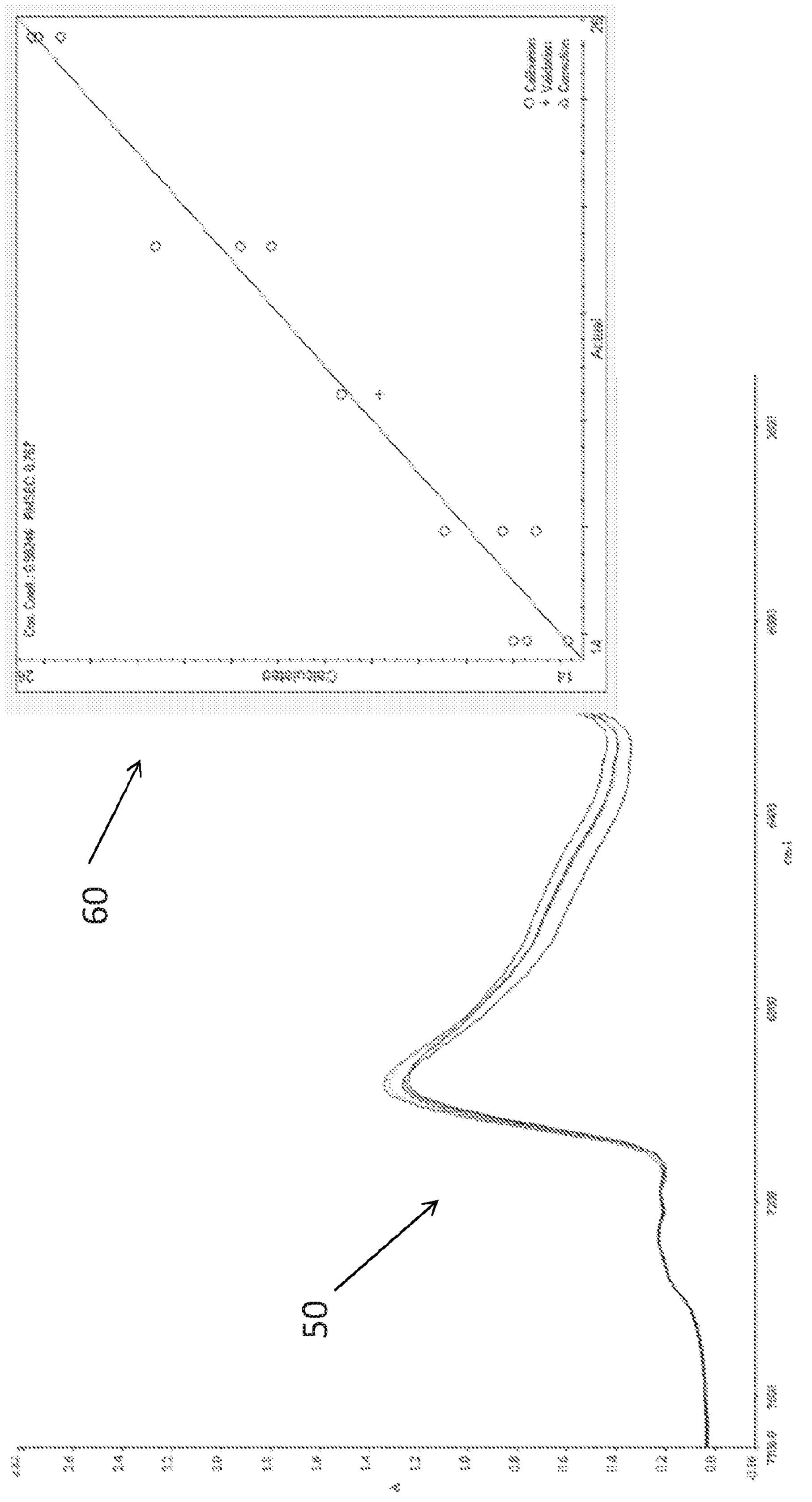


FIG. 1

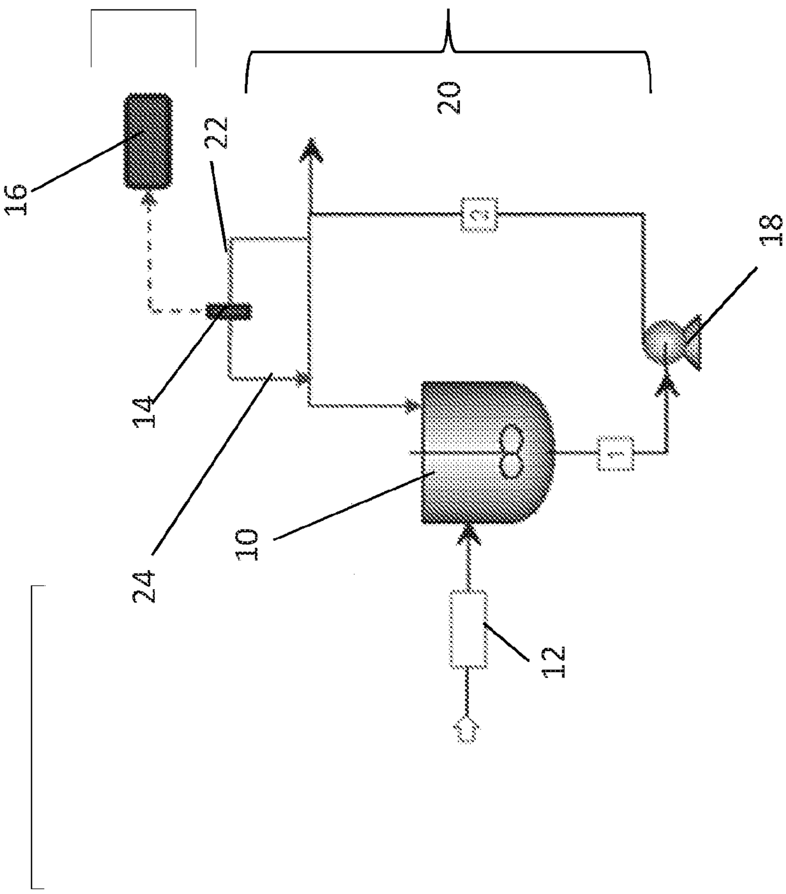


FIG. 3

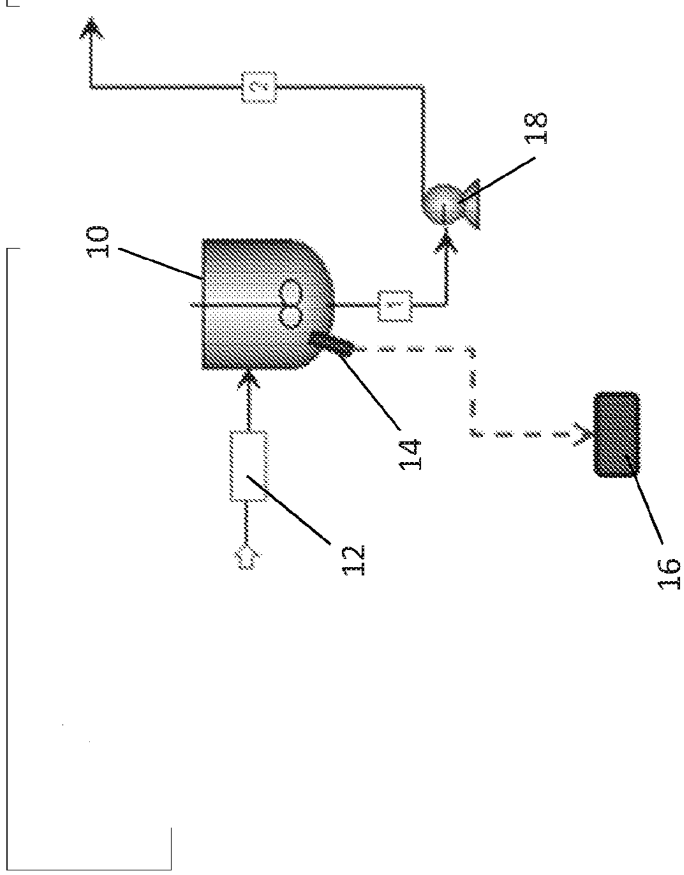


FIG. 2

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- US 200300199665 A
- US 7786246 B
- US 4217438 A
- US 3635895 A
- US 4001184 A